# EUROPEAN PATENT APPLICATION

(11) **EP 3 975 170 A1**
(43) Date of publication of application: **30.03.2022**
(21) Application number: 21199387.8
(22) Date of filing: 28.09.2021
(51) Int. Cl.: G10L 15/18, G06F 16/29

(54) **METHOD, APPARATUS, AND SYSTEM FOR MAPPING CONVERSATION AND AUDIO DATA TO LOCATIONS**

(30) Priority: 29.09.2020 US 202063084951 P; 10.12.2020 US 202017118125
(71) Applicant: HERE Global B.V., 5611 ZT Eindhoven (NL)
(72) Inventor: BEAUREPAIRE, Jerome, 10715 Berlin (DE); MUSABJI, Adil, Bartlett, 60103 (US)
(74) Representative: Potter Clarkson

(57) **Abstract**

An approach is provided for associating conversation and/or audio data with locations. The approach, for instance, involves processing audio data, metadata associated with the audio data, or a combination thereof to determine location data. The approach also involves computing a surface footprint based on the location data. The surface footprint indicates one or more of a geographic area or a plurality of locations associated with the audio data, the metadata, or a combination thereof. The approach further involves storing, in a geographic database, an association between the computed surface footprint and the audio data, the metadata, or a combination thereof.

## Description

### RELATED APPLICATION

This application claims priority from U.S. Provisional Application Serial No. 63/084,951, entitled "METHOD, APPARATUS, AND SYSTEM FOR MAPPING CONVERSATION AND AUDIO DATA TO LOCATIONS," filed on September 29, 2020, the contents of which are hereby incorporated herein in their entirety by this reference.

### BACKGROUND

Mapping service providers are continually challenged to provide compelling network services. One area of development relates to mapping content to geographic areas or locations to provide for spatial querying of the content. In particular, service providers face significant technical challenges with respect to enable more efficient searching and retrieval of audio data associated with locations.

### SOME EXAMPLE EMBODIMENTS

Therefore, there is a need for technical approaches to mapping captured conversations and/or other audio data to locations.

As used herein, the term "surface footprint" represents a geographic area and/or a plurality of locations associated with stored audio data and/or stored metadata associated with the stored audio data. The audio data can be conversation (e.g.., talk, chat, discussion, speech, etc.) and/or audio sequences (e.g., a voice note, a voice message, an audio recording, an ambient sound recording, etc.) associated with one or more users. Although various embodiments are described with respect to conversations and/or audio sequences, it is contemplated that the approach described herein may be used with other audio-identifiable and location-tagged data.

According to one embodiment, a method comprises processing audio data, metadata associated with the audio data, or a combination thereof to determine location data. The method also comprises computing a surface footprint based on the location data. The surface footprint indicates one or more of a geographic area or a plurality of locations associated with the audio data, the metadata, or a combination thereof. The method further comprises storing, in a geographic database, an association between the audio data and the computed surface footprint.

According to another embodiment, an apparatus comprises at least one processor, and at least one memory including computer program code for one or more computer programs, the at least one memory and the computer program code configured to, with the at least one processor, cause, at least in part, the apparatus to process audio data, metadata associated with the audio data, or a combination thereof to determine location data. The apparatus is also caused to compute a surface footprint based on the location data. The surface footprint indicates one or more of a geographic area or a plurality of locations associated with the audio data, the metadata, or a combination thereof. The apparatus is further caused to store, in a geographic database, an association between the audio data and the computed surface footprint.

According to another embodiment, a non-transitory computer-readable storage medium carries one or more sequences of one or more instructions which, when executed by one or more processors, cause, at least in part, an apparatus to process audio data, metadata associated with the audio data, or a combination thereof to determine location data. The apparatus is also caused to compute a surface footprint based on the location data. The surface footprint indicates one or more of a geographic area or a plurality of locations associated with the audio data, the metadata, or a combination thereof. The apparatus is further caused to store, in a geographic database, an association between the audio data and the computed surface footprint.

According to another embodiment, an apparatus comprises means for processing audio data, metadata associated with the audio data, or a combination thereof to determine location data. The apparatus also comprises means for computing a surface footprint based on the location data. The surface footprint indicates one or more of a geographic area or a plurality of locations associated with the audio data, the metadata, or a combination thereof. The apparatus further comprises means for storing, in a geographic database, an association between the audio data and the computed surface footprint.

According to another embodiment, a method comprises receiving a spatial query indicating one or more of a requested conversation, a requested surface footprint, or a requested conversation attribute. The method also comprises, in response to the spatial query, retrieving data associated with the one or more of the requested conversation, the requested surface footprint, or the requested conversation attribute from a map data layer, the map data layer storing conversation data that associates one or more recorded conversations, metadata associated with the one or more recorded conversations, or a combination thereof to one or more surface footprints representing one or more of a geographic area or a plurality of locations. The method further comprises providing the retrieved data as an output.

According to another embodiment, an apparatus comprises at least one processor, and at least one memory including computer program code for one or more computer programs, the at least one memory and the computer program code configured to, with the at least one processor, cause, at least in part, the apparatus to receive a spatial query indicating one or more of a requested conversation, a requested surface footprint, or a requested conversation attribute. The apparatus is also caused to retrieve, in response to the spatial query, data associated with the one or more of the requested conversation, the requested surface footprint, or the requested conversation attribute from a map data layer, the map data layer storing conversation data that associates one or more recorded conversations, metadata associated with the one or more recorded conversations, or a combination thereof to one or more surface footprints representing one or more of a geographic area or a plurality of locations. The apparatus is further caused to provide the retrieved data as an output.

According to another embodiment, a non-transitory computer-readable storage medium carries one or more sequences of one or more instructions which, when executed by one or more processors, cause, at least in part, an apparatus to receive a spatial query indicating one or more of a requested conversation, a requested surface footprint, or a requested conversation attribute. The apparatus is also caused to retrieve, in response to the spatial query, data associated with the one or more of the requested conversation, the requested surface footprint, or the requested conversation attribute from a map data layer, the map data layer storing conversation data that associates one or more recorded conversations, metadata associated with the one or more recorded conversations, or a combination thereof to one or more surface footprints representing one or more of a geographic area or a plurality of locations. The apparatus is further caused to provide the retrieved data as an output.

According to another embodiment, an apparatus comprises means for receiving a spatial query indicating one or more of a requested conversation, a requested surface footprint, or a requested conversation attribute. The apparatus also comprises means for retrieving, in response to the spatial query, data associated with the one or more of the requested conversation, the requested surface footprint, or the requested conversation attribute from a map data layer, the map data layer storing conversation data that associates one or more recorded conversations, metadata associated with the one or more recorded conversations, or a combination thereof to one or more surface footprints representing one or more of a geographic area or a plurality of locations. The apparatus further comprises means for providing the retrieved data as an output.

A method comprises processing at least a portion of audio data, metadata associated with the audio data, or a combination thereof to determine one or more of location data, a conversation topic, or a conversation attribute. The method also comprises enabling or restricting a providing of the audio data, the metadata, or a combination thereof based on the one or more of the location data, the conversation topic, or the conversation attribute as an output for creating a map data layer based on the enabling or disabling. The map data layer, for instance, is generated by associating the audio data with a surface footprint, and the surface footprint represents one or more of a geographic area or a plurality of locations associated with the stored audio data, the stored metadata, or a combination thereof.

According to another embodiment, an apparatus comprises at least one processor, and at least one memory including computer program code for one or more computer programs, the at least one memory and the computer program code configured to, with the at least one processor, cause, at least in part, the apparatus to process at least a portion of audio data, metadata associated with the audio data, or a combination thereof to determine one or more of location data, a conversation topic, or a conversation attribute. The apparatus is also caused to enable or restrict a providing of the audio data, the metadata, or a combination thereof based on the one or more of the location data, the conversation topic, or the conversation attribute as an output for creating a map data layer based on the enabling or disabling. The map data layer, for instance, is generated by associating the audio data with a surface footprint, and the surface footprint represents one or more of a geographic area or a plurality of locations associated with the stored audio data, the stored metadata, or a combination thereof.

According to another embodiment, a non-transitory computer-readable storage medium carries one or more sequences of one or more instructions which, when executed by one or more processors, cause, at least in part, an apparatus to determine one or more of location data, a conversation topic, or a conversation attribute. The apparatus is also caused to enable or restrict a providing of the audio data, the metadata, or a combination thereof based on the one or more of the location data, the conversation topic, or the conversation attribute as an output for creating a map data layer based on the enabling or disabling. The map data layer, for instance, is generated by associating the audio data with a surface footprint, and the surface footprint represents one or more of a geographic area or a plurality of locations associated with the stored audio data, the stored metadata, or a combination thereof.

According to another embodiment, an apparatus comprises means for processing at least a portion of audio data, metadata associated with the audio data, or a combination thereof to determine one or more of location data, a conversation topic, or a conversation attribute. The apparatus also comprises means for enabling or restricting a providing of the audio data, the metadata, or a combination thereof based on the one or more of the location data, the conversation topic, or the conversation attribute as an output for creating a map data layer based on the enabling or disabling. The map data layer, for instance, is generated by associating the audio data with a surface footprint, and the surface footprint represents one or more of a geographic area or a plurality of locations associated with the stored audio data, the stored metadata, or a combination thereof.

The following numbered paragraphs are also disclosed:
1. A method comprising:
   processing audio data, metadata associated with the audio data, or a combination thereof to determine location data;
   computing a surface footprint based on the location data, wherein the surface footprint indicates one or more of a geographic area or a plurality of locations associated with the audio data, the metadata, or a combination thereof; and
   storing, in a geographic database, an association between the computed surface footprint and the audio data, the metadata, or a combination thereof.
2. The method of paragraph 1, wherein the processing of the audio data comprises performing speech recognition to determine the location data.
3. The method of paragraph 1, further comprising:
   processing the audio data to determine one or more semantic topics represented in the audio data; and
   mapping the one or more semantic topics based on the surface footprint.
4. The method of paragraph 3, wherein the surface footprint is used to provide a navigation function to favor or avoid said one or more of the geographic area or the plurality of locations associated with one or more semantic topics extracted from the audio data.
5. The method of paragraph 1, wherein the audio data includes one or more audio captures of one or more conversations, and wherein the metadata includes an identification of one or more conversations participants.
6. The method of paragraph 1, further comprising:
   receiving a spatial query for a requested audio data, the spatial query indicating one or more locations;
   in response to the spatial query, retrieving the associated audio data based on the surface footprint including the one or more indicated locations; and
   providing the associated audio data that was retrieved as the requested audio data.
7. The method of paragraph 1, further comprising:
   receiving a query for a requested surface footprint, the query specifying a topic, an attribute, or a combination thereof associated with the requested surface footprint;
   in response to the query, retrieving the surface footprint with the associated audio data based on the topic, the attribute, or a combination thereof; and
   providing the retrieved surface footprint as the requested surface footprint.
8. The method of paragraph 1, further comprising:
   determining one or more of a mode of transport or a movement pattern associated with the audio data, the metadata, or a combination thereof; and
   categorizing the surface footprint, the audio data, the metadata, or a combination thereof based on said one or more of the mode of transport or the movement pattern.
9. The method of paragraph 8, further comprising:
   receiving a query for a requested surface footprint or a requested audio data, the query indicating one or more of a specified mode of transport or a specified movement pattern;
   in response to the query, retrieving and providing the requested surface footprint or the requested audio data from the categorized surface footprint or the categorized audio data based on the topic, the attribute, or a combination thereof.
10. The method of paragraph 1, wherein the surface footprint is used to enable or disable an audio recording function of a device based on one or more of a device location or a conversation topic.
11. The method of paragraph 1, wherein the association between the audio data and the computed surface footprint is stored in a map layer of the geographic database.
12. The method of paragraph 1, further comprising:
   providing data for presenting a user interface indicating a representation of one or more of the surface footprint, the audio data, or the metadata.
13. An apparatus comprising:
   at least one processor; and
   at least one memory including computer program code for one or more programs,
   the at least one memory and the computer program code configured to, with the at least one processor, cause the apparatus to perform at least the following:
      receive a spatial query indicating one or more of a requested conversation, a requested surface footprint, or a requested conversation attribute;
      in response to the spatial query, retrieve data associated with the one or more of the requested conversation, the requested surface footprint, or the requested conversation attribute from a map data layer, the map data layer storing conversation data that associates (i) one or more recorded conversations, metadata associated with the one or more recorded conversations, or a combination thereof to (ii) one or more surface footprints representing one or more of a geographic area or a plurality of locations; and
      provide the retrieved data as an output.
14. The apparatus of paragraph 13, wherein the spatial query further specifies a surface footprint size, and wherein the retrieved data is further based on the surface footprint size.
15. The apparatus of paragraph 13, wherein the spatial query further specifies one or more of a movement pattern or a mode of transport and wherein the retrieved data is further based on the one or more of the movement pattern or the mode of transport.
16. The apparatus of paragraph 13, wherein the requested conversation attribute includes one or more of a conversation participant or a conversation time.
17. The apparatus of paragraph 13, wherein the conversation data is crowd-sourced from a plurality of recording devices capturing one or more conversations.
18. A non-transitory computer-readable storage medium carrying one or more sequences of one or more instructions which, when executed by one or more processors, cause an apparatus to at least perform the following steps:
   processing at least a portion of audio data, metadata associated with the audio data, or a combination thereof to determine one or more of location data, a conversation topic, or a conversation attribute; and
   enabling or restricting a providing of the audio data, the metadata, or a combination thereof based on the one or more of the location data, the conversation topic, or the conversation attribute as an output for creating a map data layer,
   wherein the map data layer is generated by associating the audio data, the metadata, or a combination thereof with a surface footprint; and
   wherein the surface footprint represents a geographic area, a plurality of locations, or a combination thereof associated with the stored audio data, the stored metadata, or a combination thereof.
19. The non-transitory computer-readable storage medium of paragraph 18, wherein the enabling of the providing of the audio data, the metadata, or a combination is initiated based on determining that the location data indicates a non-privacy sensitive location.
20. The non-transitory computer-readable storage medium of paragraph 18, wherein the restricting of providing the audio data, the metadata, or a combination is based on determining that the location data indicates a privacy sensitive location, wherein the geographic area, the plurality of locations, or a combination thereof include one or more virtual locations.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing a method of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of associating conversation and/or audio data with locations, according to one or more example embodiments;
FIG. 2 is diagram illustrating an example user interface for presenting location-associated conversation and/or audio data, according to one or more example embodiments;
FIG. 3 is a flowchart that summarizes a process for recording and providing location-associated conversation and/or audio data, according to one or more example embodiments;
FIG. 4 is a diagram of a mapping platform capable of associating conversation and/or audio data with locations, according to one or more example embodiments;
FIG. 5 is a flowchart of a process for mapping conversation and/or audio data to surface footprints, according to one or more example embodiments;
FIGs. 6A-6C are diagrams of example map user interfaces marked with surface footprints of audio data, according to one or more example embodiments;
FIG. 7 is a flowchart of a process for performing a spatial query for surface footprint(s) and/or audio data, according to one or more example embodiments;
FIG. 8 is a flowchart of a process for enabling or restricting outputting audio data, according to one or more example embodiments;
FIGs. 9A-9C are diagrams of example user interfaces for presenting surface footprints of conversation and/or audio data, according to one or more example embodiments;
FIG. 10 is a diagram of a geographic database, according to one or more example embodiments;
FIG. 11 is a diagram of hardware that can be used to implement one or more example embodiments;
FIG. 12 is a diagram of a chip set that can be used to implement one or more example embodiments; and
FIG. 13 is a diagram of a mobile terminal (e.g., mobile device or component thereof) that can be used to implement one or more example embodiments.

### DESCRIPTION OF SOME EMBODIMENTS

Examples of a method, apparatus, and computer program for associating conversation and/or audio data with locations are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

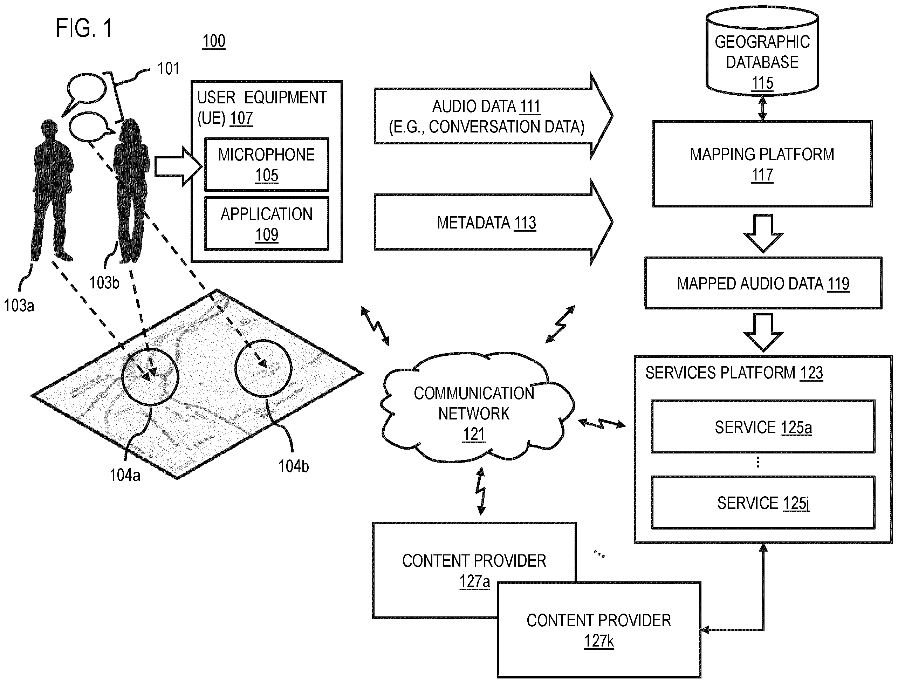

FIG. 1 is a diagram of a system 100 capable of associating conversation and/or audio data with locations, according to one or more example embodiments. Conversations (e.g., conversations 101 between conversation participants 103a and 103b, also referred to as conversation participants 103) and/or other types of audio (e.g., ambient sounds, alerts, signals, etc.) often contain information that a user may want to access later. In such cases, the user can capture and store the conversation or audio sequence via a microphone 105 or equivalent recording device of a user equipment device (UE) 107 as audio data 111 or other equivalent recording for later access. In one embodiment, the UE 107 can execute an application 109 (e.g., an audio recording application) to capture the audio data 111 (e.g., using a hardware and/or software analog to digital converter) as digital files. However, retrieving and providing access to the information in the audio data 111 (e.g., conversation data or recordings) presents significant technical challenges.

To address these technical challenges, the system 100 of FIG. 1 introduces a capability to map conversations or audio sequences (e.g., audio data 111) to geographic locations 104 (e.g., geographic locations 104a and 104b) to enable more efficient search of past conversations or to enable analytics based on the location-associated conversations and/or audio data. In one embodiment, the location data can be determined from metadata 113 associated with the recorded conversations 101 (e.g., audio data 111) that indicates where a location took place. For example, the metadata 113 can included location tags indicating precise or approximate locations that are determined using, for instance, any positioning system or service (e.g., satellite positioning receivers such as those based on the Global Positioning System (GPS) or any other equivalent Global Navigation Satellite system (GNSS)). The location data can be parsed (e.g., via natural language processing) from the audio data 111 to identify locations discussed in the recorded conversations 101 and/or the actual location where the conversation took place. Other examples of metadata are conversation attributes including, but not limited to, identities of conversation participants 103 (e.g., based on social network data), time of the conversation, activities engaged in during the conversation (e.g., based on social network data), mode of transport during the conversation (e.g., based on user location history or mobility graph), route during the conversation (e.g., based on user location history or mobility graph), and/or the like. In other words, the system 100 enables location data to play a more prominent role in recorded conversations and/or captured audio sequences in general.

In one embodiment, the audio data 111 (e.g., recorded conversations or other recorded audio sequences) can be associated with any feasible representation of a location, such as a representation of geographic coordinate(s), address(es), digital map data record(s) (e.g., record(s) of a geographic database 115, a mapping platform 117, etc.) indicating map locations and/or features (e.g., points of interests, terrain features, geographic areas, structures, etc.) to generate location-associated audio data 119. In one embodiment, the location-associated audio data 119 can be a standalone data structure comprising the data records associating the audio data 111 with respective locations represented in the geographic database 115 or can be an additional data layer of the geographic database 115 that is associated with other location data records of the geographic database 115. In one embodiment, the location-associated audio data 119 (e.g., location-associated conversations 101 and/or audio sequences) can be provided as an output from the system 100. For example, the output can be transmitted to UEs 107, services 125a-125j of a services platform 123 - also collectively referred to as services 125, and/or content providers 127a-127k - also collectively referred to as content providers 127).

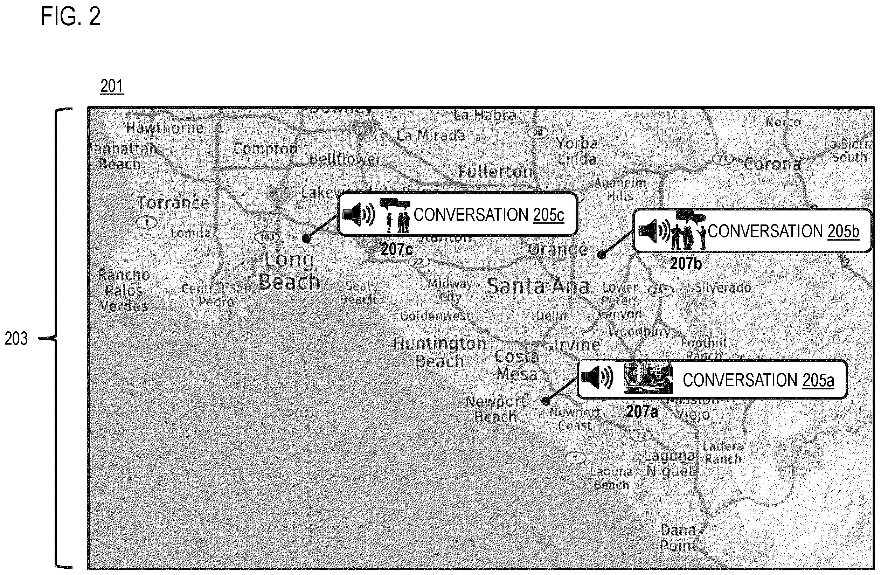

FIG. 2 is diagram illustrating an example user interface for presenting location-associated conversation and/or audio data 111, according to one or more example embodiments. As shown, the system 100 can present a mapping user interface (UI) 201 that depicts a representation of a geographic area 203. On this geographic area 203, the system 100 depicts representations of conversations 205a-205c that have occurred within or that mention the respective geographic locations associated with each conversation 205a-205c. In this way, a user can quickly view previous conversations by location so that the user can be reminded of conversations at or about certain locations. Optionally, the representations also contain graphics, thumbnails, and/or images of the participants of the conversations. For instance, the representation of the conversation 205a includes a thumbnail 207a of the classroom conversation. As other instances, the representation of the conversation 205b includes a graphic 207b of office conversations involving four people, while the representation of the conversation 205c includes a graphic 207c of a conversation in a restaurant among three people.

By way of example, the system 100 can apply speech recognition algorithms on the audio data 111 to separate conversations from music, animal sound, background sounds, etc. and/or to identify the background (e.g., a classroom, an office, a restaurant, etc.), the number of conversation participants, the identities of the conversation participants, etc. Knowing the identities of the conversation participants, the system 100 can generate graphics 207b, 207c including, for example, avatars that have the general characteristics (e.g., age, sex, job, clothes, etc.) of the identified conversation participants, or physically resemble the identified conversation participants. In comparison, the thumbnail 207a is a reduced-sized actual image of a classroom conversation, while the graphics 207b, 207c are computer-generated graphical representations of the conversation participants or the characters or personas of the conversation participants.

In another embodiment, the system 100 can verify the background, the number of conversation participants, the identities of the conversation participants, etc. with additional sensor data (e.g., the location data) collected from the UE 107 of people (e.g., conversation participants). By way of example, cellular network signals and/or Wifi access points can derive locations where GNSS signals are unavailable, thereby verifying conversations as occurred in, e.g., subway stations, indoors, etc.

In other words, the system 100 can enable spatial queries to conveniently retrieve a conversation or other audio extract by leveraging the spatial information contained in the conversation/audio sequence (e.g., audio data 111) and/or the metadata 113 associated with it. The system 100 can make such queries possible for audio data 111 based both on the actual location of the recording and the tagged location(s) mentioned in the conversation itself, for easier searching.

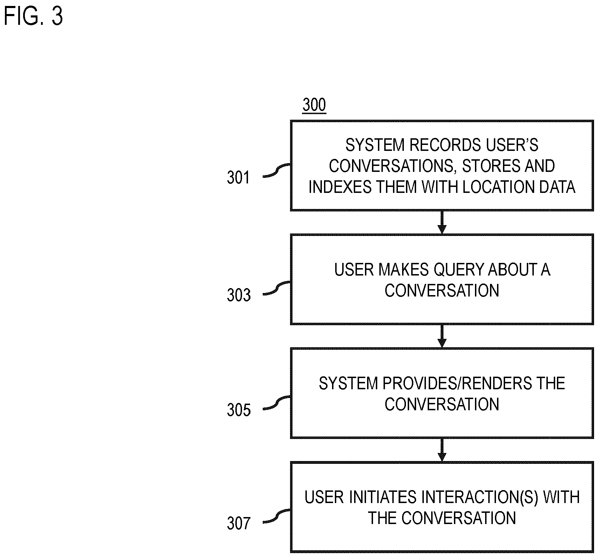

FIG. 3 is a flowchart that summarizes a process 300 for recording and providing location-associated conversation and/or audio data 111, according to one or more example embodiments. More specifically, the process 300 illustrates an interaction with the system 100 and a user with respect to location-associated audio data 119 (e.g., location-associated conversation and/or audio sequences according to the embodiments described herein). In one embodiment, in step 301, the system 100 can record in a database (e.g., the geographic database 115) audio data 119, such as a user's conversation(s) (when allowed to do so, e.g., based on explicit consent and/or privacy settings in the UE 107). The system 100 then can index and store the conversation(s) with respective location data tag(s). The location tag(s) can be based on location(s) mentioned in the conversations, location(s) embedded in metadata of the conversation recordings, etc.

Later, in step 303, when the user makes a query to the system 100 about a specific conversation that happened with a specific person (e.g., colleague John smith), at a specific location (e.g., in a conference room of a client's office) or about a specific location (e.g., a warehouse), and/or at a specific time (e.g., August 20, 2020), the system 100 can search such conversation in the geographic database 115 based on the specific person, the specific location, and/or the specific time.

In one embodiment, in step 305, the system 100 can provide/render the searched conversation and/or a written transcript of the conversation to the user so that the user can be reminded of the content of that conversation. For instances, the system 100 can present a user interface indicating a representation of the surface footprint, the audio data, the metadata, or a combination thereof as depicted in FIG. 2, FIGs. 6, and FIGs. 9.

In one embodiment, in step 307, the system 100 and/or the user can initiate user interaction(s) with the conversation recordings/transcripts, such as sharing it with other user(s) and/or complementing it with additional information, etc. via message(s), instant message(s), social media post(s), blog/vlog post(s), post(s) on user review site(s), etc. By way of example, the system 100 can apply automated speech recognition (ASR) to convert spoken words to text, and natural language processing (NLP) or any equivalent systems to derive meanings from the text.

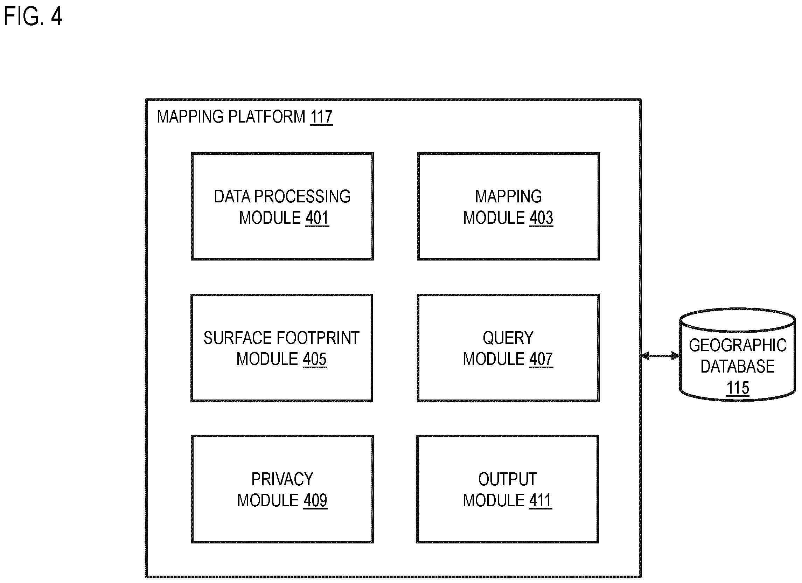

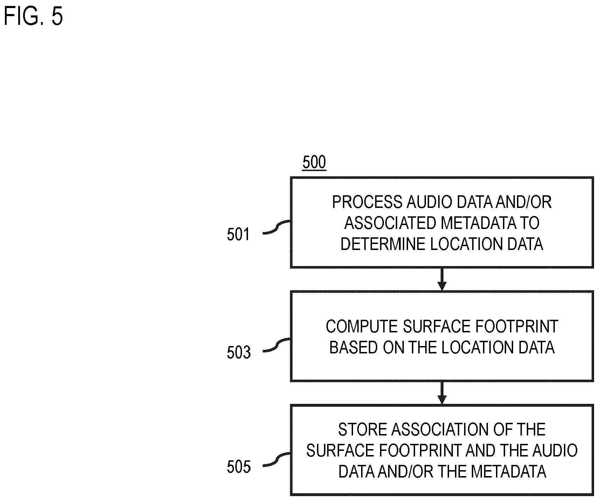

In one embodiment, as shown in FIG. 4, the mapping platform 117 of the system 100 includes one or more components for mapping conversation and/or audio data to surface footprints, according to the various embodiments described herein. It is contemplated that the functions of the components of the mapping platform 117 may be combined or performed by other components of equivalent functionality. As shown, in one embodiment, the mapping platform 117 includes a data processing module 401, a mapping module 403, a surface footprint module 405, a query module 407 (e.g., including a search algorithm for search among location-associated audio data 119 for information), a privacy module 409, and an output module 411. The above presented modules and components of the mapping platform 117 can be implemented in hardware, firmware, software, or a combination thereof. Though depicted as a separate entity in FIG. 1, it is contemplated that the mapping platform 117 may be implemented as a module of any of the components of the system 100 (e.g., a component of the services platform 123, services 125, content providers 127, UE 107, modes of transport (e.g., vehicles, taxis, buses, trains, ferries, flights, etc.) carrying the users, and/or the like). In another embodiment, one or more of the modules 401-411 may be implemented as a cloud-based service, local service, native application, or combination thereof. The functions of the mapping platform and modules 401-411 are discussed with respect to FIGs. 5-9 below.

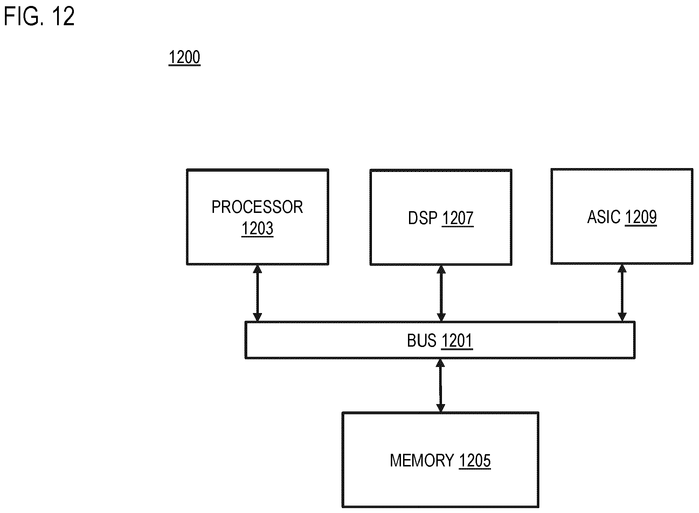

FIG. 5 is a diagram of a process 500 for mapping conversation and/or audio data to surface footprints, according to one or more example embodiments. In various embodiments, the mapping platform 117 and/or any of the modules 401-411 may perform one or more portions of the process 500 and may be implemented in, for instance, a chip set including a processor and a memory as shown in FIG. 12. As such, the data mapping platform 117 and/or any of the modules 401-411 can provide means for accomplishing various parts of the process 500, as well as means for accomplishing embodiments of other processes described herein in conjunction with other components of the system 100. Although the process 500 is illustrated and described as a sequence of steps, it is contemplated that various embodiments of the process 500 may be performed in any order or combination and need not include all of the illustrated steps.

In one embodiment, in step 501, the data processing module 401 can process audio data (e.g., the audio data 111), metadata associated with the audio data (e.g., the metadata 113), or a combination thereof to determine location data (e.g., GPS coordinates, addresses, Wifi access points, etc.). For instance, the audio data 111 can be conversation (e.g., talk, chat, discussion, speech, etc.) and/or audio sequences (e.g., a voice note, a voice message, an audio recording (e.g., concerts), an ambient sound recording, etc.) associated with one or more users of the UE 107.

In one embodiment, the processing of the audio data comprises performing speech recognition to determine the location data. For example, the data processing module 401 can apply one or more speech recognition algorithms (e.g., perceptual linear prediction (PLP) features, Viterbi search, deep neural networks, discrimination training, weighted finite-state transducers (WFST) framework, etc.) on the conversation to extract the location data. By way of example, the conversation can be a phone call stated that "I am 10 minutes away from the airport and see you soon."

In another embodiment, the metadata with the audio data includes a location tag, and the processing of the metadata comprises extracting the location data for the location tag. For example, the metadata 113 associated with the audio data 111 may include a name the author who recorded the audio data 111, the time and location for recording the audio data 111, recording settings (e.g., size and format of the data, etc.), the model of the UE 107 used to record, etc. In this case, the data processing module 401 can extract the location data directly from the metadata 113.

For instance, the audio data 111 can be recorded using a microphone of the UE 107 in conjunction with a voice memo, dictation, or captioning application. Such application can use codecs to encode and compress the audio data 111 into a format compatible with an audio player/program (e.g., an MP3 player/program, an MP4 player/program, a call recorder/program, a voice recognition software, etc.). By way of example, ID3 is a metadata container most often used in conjunction with the MP3 audio file format. ID3 can include metadata such as the title, artist, album, track number, and other information about the file to be stored. MP3 defines a number of tags for storing metadata such as album, artist, genre, composer, copyright, creation year, bytes per minute, part of a compilation, etc. MP4 further defines a number of metadata tags such as media type, owner, purchase day, TV episode, TV season, etc. Although standard MP3 and MP4 formats do not contain recording location and timestamp, the voice memo, dictation, or captioning application can add such data into the metadata 113.

In another instance, the audio data 111 can be recorded using a camera of the UE 107. By way of example, the audio data 111 can be recorded using the Exchangeable image file format (Exif) audio file specification which describes the Resource Interchange File Format (RIFF) file (bitstream) format (used for audio container formats like the Waveform Audio File Format WAVE, or WAV) and defines a number of metadata tags such as maker's name, copyright, creation date/time, encoding format, number of channels, sampling rate, average bytes per second, bits per sample, date created, time created, Exif version, maker note, related image file, etc. Audio in WAV files can be encoded in audio coding formats, such as GSM, MP3, MP4, to reduce the file size. Although the WAV format does not contain a recording location, the camera application can add such data into the metadata 113.

In other scenarios when GNSS signals are unavailable (e.g., subway stations, indoors, etc.), the system 100 can apply other positioning assisted navigation technologies, e.g., WiFi, Bluetooth, Bluetooth low energy, 2/3/4/5/6G cellular signals, ultra-wideband (UWB) signals, etc., and various combinations of the technologies and/or other sensor data, to derive the location data of the audio data. By way of example, the system 100 can derive from either cellar network signals or Wifi access point data the location data of the audio data captured indoors and/or underground.

With the location data, the mapping module 403 can associate or map the conversations and/or the audio data 111 to a digital map for the surface footprint module 405 to conduct spatial analysis and classify the conversation related to various surface footprints and/or spatial signatures of audio sequences. In one embodiment, the classification is performed using one or more machine learning models as discussed later.

In one embodiment, in step 503, the surface footprint module 405 can compute a surface footprint based on the location data. As mentioned, the surface footprint indicates one or more of a geographic area or a plurality of locations associated with the audio data, the metadata, or a combination thereof. A surface footprint can be a short ranges area (e.g., related John's neighborhood or city), or a wider area (e.g., a country, a continent, etc.). Such surface footprint can be used to classify conversations which were about some local themes versus some other which had relationships with a more global footprint.

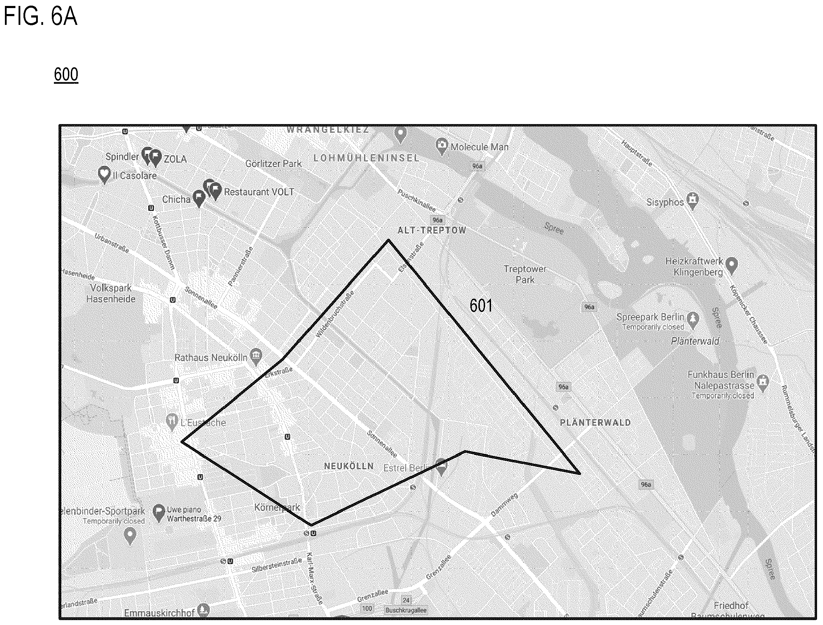

In one embodiment, the output module 411 can provide data for presenting a user interface indicating a representation of one or more of the surface footprint, the audio data, or the metadata. FIGs. 6A-6C are diagrams of example map user interfaces marked with surface footprints of audio data, according to one or more example embodiments. In one embodiment, the surface footprint can be defined by the physical locations where audio data was collected and/or being collected. By way of example, the map user interface 600 in FIG. 6A shows a geographic surface footprint 601 defined by conversations (e.g., about building a new community park) occurring and/or occurred in e.g., an area of 15 km2 in John's neighborhood. (Conversation representations were omitted from FIG. 6A for simplification).

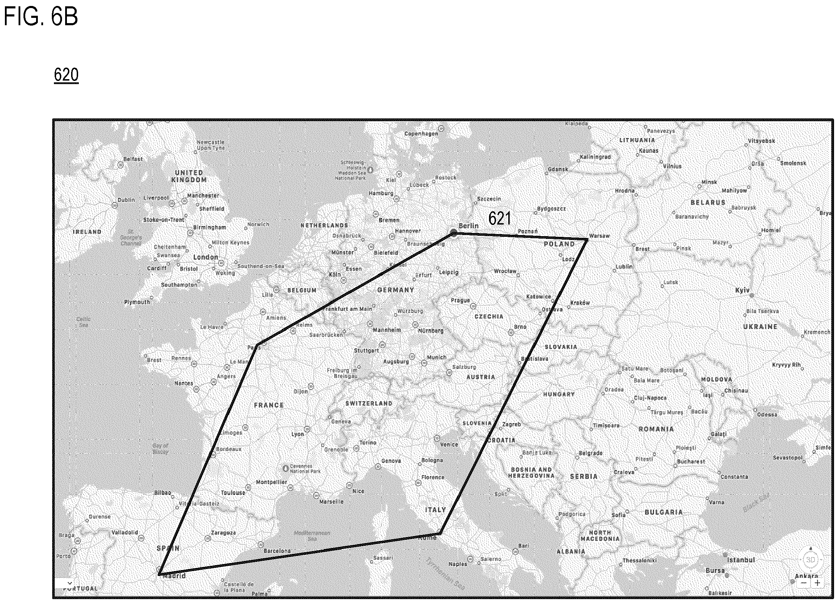

In another embodiment, the surface footprint can be defined by route(s) of a movement pattern and/or a mode of transport associated with the audio data (e.g., a family road trip, a new album promotion tour, etc.). For example, the map user interface 620 in FIG. 6B shows a surface footprint 621 of a series of conversations occurred in e.g.. an area of 30000 km2 during John's 3-week family vacation road trip. (Conversation representations were omitted from FIG. 6A for simplification).

The movement pattern and/or a mode of transport associated with the audio data can be associated with moving conversations, in comparison with the discussed static conversations (e.g., at home, in an office, etc.). By way of example, the system 100 can analyze a type of movement associated with one conversation (e.g., a conversation happening inside a car lasting for 100 km) and/or a series of conversations (e.g., several medical appointments on a cruise boat). All those spatial and/or contextual elements could be used to be leveraged in spatial queries later on. Other movement-related context, such as moving patterns (e.g., traffic), weather, etc. can also be leveraged to give more context to the conversation(s). For example, the user can query: "Find me that conversation in a train between Berlin and Munich last month," "Find me that discussion with Bernd in which we were stuck in traffic," "Find me that flight routing conversations with the Airline service desk when there was a snow storm last winter," etc.

In yet another embodiment, the surface footprint can be defined by dealer and/or distribution territories, jurisdictions, etc. of a movement pattern and/or a mode of transport associated with the audio data (e.g., a medical equipment salesperson tour, a political campaign tour, etc.).

In another embodiment, in step 505, the output module 411 can store, in a geographic database (e.g., the geographic database 115), an association between the computed surface footprint (e.g., surface footprints 601 and/or 621) and the audio data 111, the metadata 113, or a combination thereof.

In yet another embodiment, the data processing module 401 can process the audio data to determine one or more semantic topics represented in the audio data, for the mapping module 403 to map the one or more semantic topics based on the surface footprint. By way of example, two co-workers are discussing a new project and the conversation is recorded and processed according to the embodiments described herein to relate the conversation and/or any of the topics in the conversation (e.g., a new project) to a location or surface footprint, then the association of the conversation to the location/footprint can be used to support subsequent spatial queries about the conversation.

In another embodiment, the system 100 can support non-conversation participants to access the conversations and/or conversation statistics based on privacy settings of conversation participants regarding access rights by different entities. Each conversation participant can set up the participant's own privacy settings (e.g., access rights) to enable or restrict recording and/or output conversations per topic(s), per user or user group (e.g., family, friends, colleagues, etc.), per company (e.g., banks, e-commerce stores, etc.), per service platform (e.g., internet services, social network services, gaming services, etc.), per advertiser, per location (e.g., restricted facilities), etc. For instance, the system 100 can implement privacy settings set by location owners/operators (e.g., companies, data centers, research laboratories, government agencies, etc.). By way of example, such privacy settings can allow free-access (i.e., no access restrictions) to high level topics of conversations could be access-free, while requiring re-authentication and/or higher levels of authentication to access specific details of the conversations (e.g., the details of a confidential project), and/or conversations occurred in restricted access facilities.

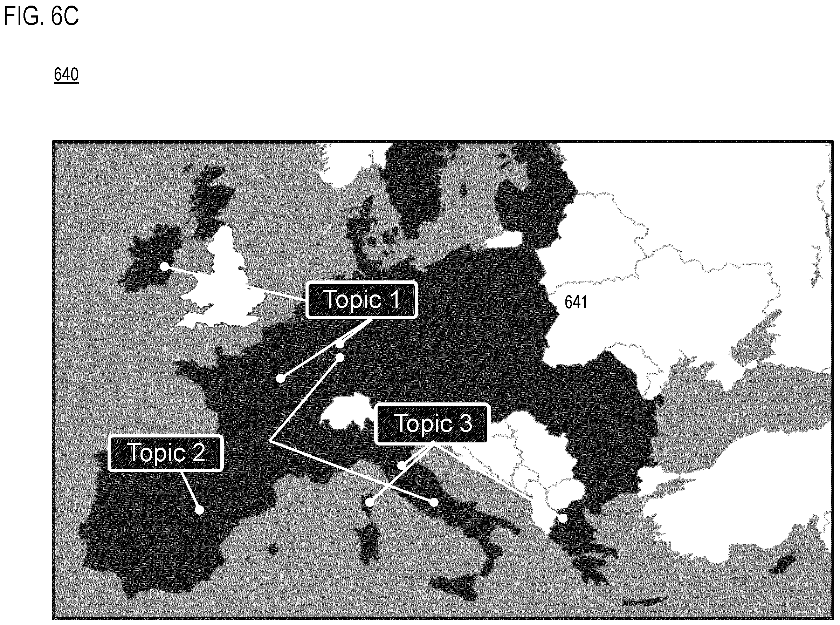

FIG. 6C is diagram of an example map user interface 640 marked with a surface footprint 641 of audio data in conjunction with semantic topics, according to one or more example embodiments. By way of example, the surface footprint 641 can cover the whole European Union in black, and the query module 407 can surface semantic topics such as "Topic 1," "Topic 2," "Topic 3," etc. that are semantically parsed from the recorded conversations or audio data, e.g., using natural language processing or any equivalent speech recognition systems.

In another embodiment, the surface footprint 641 can be used to provide a navigation function to favor or avoid the one or more of the geographic area or the plurality of locations associated with one or more semantic topics extracted from the audio data. By way of example, John decides that his family is not to going to travel to certain areas in the European Union this summer, since his family has very divided views on "Topic 2" extracted from conversations of tourists who visited the European Union recently.

As another instance, one or more of the semantic topics can be used to provide a navigation function to favor or avoid the one or more of the geographic area or the plurality of locations associated with one or more semantic topics extracted from the audio data. For example, John decides to tour around areas in the European Union having a lot of conversations on "outdoor concerts."

In one embodiment, the audio data includes one or more audio captures of one or more conversations, and the metadata includes an identification of one or more conversations participants that can be shown in thumbnails and/or graphics (e.g., FIG. 2). For instance, the data processing module 401 can apply recognition algorithms for sound, speech, music, animal, etc. on the audio data 111 to separate conversations, music, animal sounds, etc. from the background sounds, and/or to identify the background (e.g., a classroom, an office, a restaurant, a gum, a pet store, a garage, a hospital, a warehouse, a bus, etc.), the number of conversations participants, the identities of the conversations participants and their characteristics (e.g., age, sex, job, clothes, etc.). By way of example, the system 100 can apply machine learning to identify background sound, tough tunes, different accents, etc.

In another embodiment, the system 100 can verify the background of conversation, the number of conversation participants, the identities of the conversation participants 103, etc. with additional sensor data (e.g., the location data, speed data, ambient light data, fitness tracking data, etc.) and/or personal data (e.g., contact data, social networks data, calendar data, mobility data, etc.). By way of example, the system 100 can collect location data from the UEs 107 of the conversation participants 103 and verify their locations are in the proximity of each other. As another example, the system 100 can collect contact data from the UEs 107 of the conversation participants 103 and verify their relationships and/or identities.

In one embodiment, the query module 407 can receive a spatial query for a requested audio data, the spatial query indicating one or more locations.

Example queries may be: "Among meetings with this client at different locations, at which meeting the client mentioned the budget deadline?" "Which lecture in the grand hall of the annual conference focusing on the 6G network?" "What is the flight number and airport terminal that John told me at home?" "Who told me about her hiking trip to Peru?" "Which house my real estate agent mentioned that has fences and a water fountain?"

The query may be received from any user input interface, such as a touch screen, keypads, microphones (e.g., via voice command), rotating/shaking the UE 107, cameras (via a gaze, a gesture, etc.), etc.

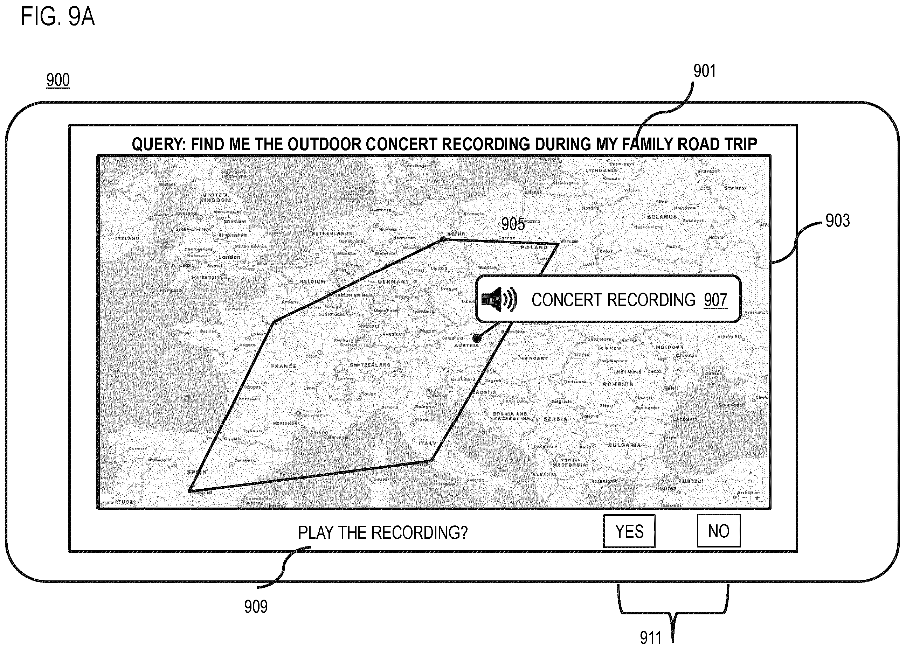

In response to the spatial query, the query module 407 can retrieve (e.g., from the geographic database 115) the associated audio data based on the surface footprint including the one or more indicated locations, and provide the associated audio data that was retrieved as the requested audio data. A user can query the system 100 with location and/or information of other metadata tags such as a time or a time frame (e.g., a few days ago), the person talking with, activity, etc. FIGs. 9A-9C are diagrams of example user interfaces for presenting surface footprints of conversation and/or audio data, according to one or more example embodiments.

By way of example, John discussed with his family at home about a summer vacation and then he went to work and talked to other people on different floors of his office building about different projects. These conversations can be recorded via one device (e.g., John's smart phone, wearable devices, etc.), and/or in conjunction with other smart devices (e.g., a home hub device, a smart speaker, etc.) via an application or platform (e.g., the mapping platform 117) in the geographic database 115. Then later, John can ask one or more specific conversations, or review what conversations based on location(s) and/or other metadata tags (e.g., time, activity, etc.).

For instance, John can query "What did I talk about at home yesterday?" The query module 407 knows that John's home location, and retrieves the relevant conversation(s) based on John's home location and the time tag "yesterday". As another instance, John can query "Which projects George discussed with me in the office last month?" The query module 407 can retrieve John's the office building and the floors he and George visited last month, and then retrieve the relevant conversation based at least on that locations. As mentioned, each conversation participant and/or location owner/operator can set up privacy settings (e.g., access rights) to enable or restrict recording and/or output conversations per topic(s), per location, per user or user group, per company, etc.

In one embodiment, the data processing module 401 can determine one or more of a mode of transport (e.g., walking, bicycle, vehicle, bus, taxi, ferry, flight, etc.) or a movement pattern (e.g., a work commute route, a family trip, a college freshman orientation program route, the Rhine River cruise, a house shopping tour, a medical salesperson trip, a startup roadshow, a rock band tour, etc.) associated with the audio data, the metadata, or a combination thereof. The surface footprint module 405 can categorize the surface footprint, the audio data, the metadata, or a combination thereof based on the one or more of the mode of transport or the movement pattern, for example, for efficient storage and/or easier retrieval.

Subsequently, the query module 407 can receive a query for a requested surface footprint (e.g., "find me the surface footprint of my family road trip to Europe") or a requested audio data (e.g., "find me the outdoor concert recording during my family road trip"), the query indicating one or more of a specified mode of transport (e.g., a vehicle) or a specified movement pattern (e.g., a family road trip). In response to the query, the query module 407 can retrieve and provide the requested surface footprint (e.g., the family trip surface footprint 621 in FIG. 6B) or the requested audio data (e.g., John daughter's recording of the outdoor concert in Vienna Austria) from the categorized surface footprint or the categorized audio data based on the topic, the attribute (e.g., road trip, Europe, outdoor concert, etc.), or a combination thereof.

By way of example, FIG. 9A is diagram of an example user interface 900 for presenting a surface footprint of conversation and/or audio data, according to one or more example embodiments. The user interface 900 shows a query 901: "Find me the outdoor concert recording during my family road trip," and a map 903 depicting a family trip surface footprint 905 and a concert recording representation 907. The user interface 900 also shows a prompt 909 of "Play the recording" and two buttons 911 "Yes" and "No." As mentioned, the query 901 may be typed, finger-written, voice-commanded, etc. Instead of electing the buttons 911, the user can voice selected to play the recording.

In another embodiment, the query module 407 can receive a query (e.g., from a user which can be a consumer, a business user, a public agency user, an non-profit origination user, etc.) for a requested surface footprint, the query specifying a topic, an attribute, or a combination thereof associated with the requested surface footprint. By way of example, the query may be "show me the conversations in New York city mentioned Topic A during August 2020." The system 100 can provide anonymous conversations and/or conversation statistics as later discussed in conjunction with the privacy module 409.

In response to the query, the query module 407 can retrieve the surface footprint with the associated conversation statistics prepared by the surface footprint module 405 based on the topic (e.g., Topic A), the attribute (e.g., New York city and August 2020), or a combination thereof, and provide the retrieved surface footprint as the requested surface footprint (e.g., on a map user interface).

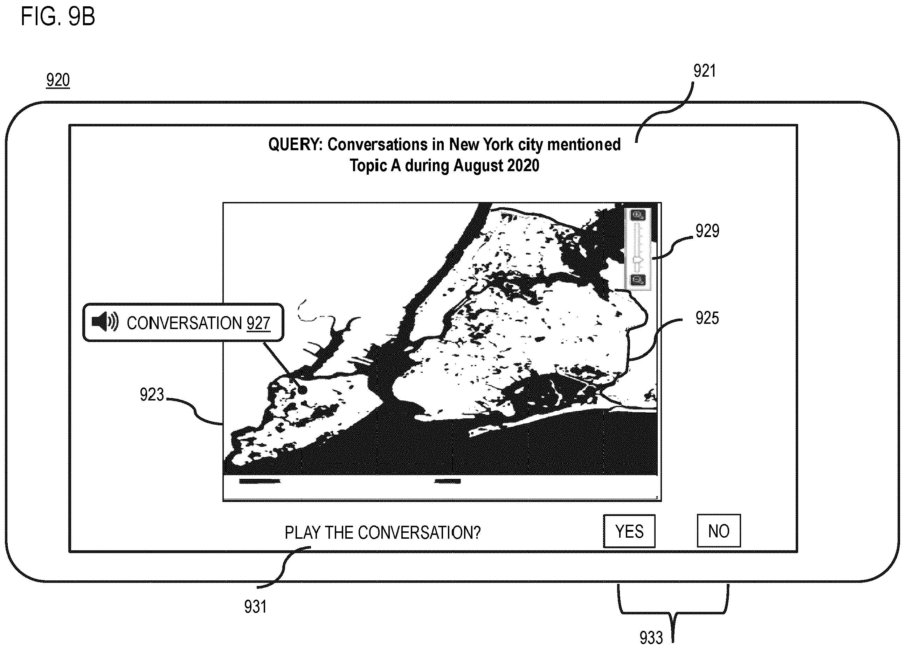

By way of example, FIG. 9B is diagram of an example user interface 920 for presenting a surface footprint of conversation and/or audio data, according to one or more example embodiments. The user interface 920 shows a query 921: "Conversations in New York city mentioned Topic A during August 2020," and a map 923 depicting a New York City Topic A surface footprint 925, a sample or representative conversation representation 927, and a zoom level slide bar 929. The boundaries of New York City are defined by the city border lines in FIG. 9B at a set zoom level. In this example, the system 100 can perform conversation statistical analysis to determine representative conversation content regarding products/services associated with Topic A (e.g., When to purchase the products/services? At what prices and/or interest rate?) based on all conversations mentioned Topic A in New York city during August 2020. The system 100 can then generate a sample conversation or to synthesize an artificial conversation to present the representative conversation content regarding products/services associated with Topic A.

The user interface 920 also shows a prompt 931 of "Play the conversation" and two buttons 933 "Yes" and "No." As mentioned, the query 921 may be typed, finger-written, voice-commanded, etc. Instead of electing the buttons 933, typing, etc., the user can voice-command to play the conversation.

In one embodiment, the association between the audio data and the computed surface footprint of the above-discussed embodiments can be stored in a map layer of a geographic database (e.g., the geographic database 115), for example, for the query module 407 to retrieve and provide a requested surface footprint or requested audio data.

In one embodiment, the system 100 can analyze and data-mine the conversations mentioned Topic A during August 2020 for insights related to the conversations, such as people in New York city were interested in refinancing mortgages by October 2020, at an interest rate rage of 2.75% - 3.5%, a cost range of 1-2 points, etc.

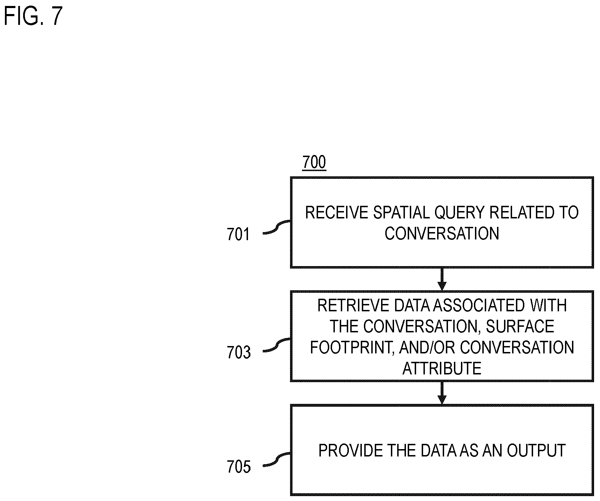

FIG. 7 is a flowchart of a process 700 for performing a spatial query for surface footprint(s) and/or audio data, according to one or more example embodiments. In various embodiments, the mapping platform 117 and/or any of the modules 401-411 may perform one or more portions of the process 700 and may be implemented in, for instance, a chip set including a processor and a memory as shown in FIG. 12. As such, the mapping platform 117 and/or any of the modules 401-411 can provide means for accomplishing various parts of the process 700, as well as means for accomplishing embodiments of other processes described herein in conjunction with other components of the system 100. Although the process 700 is illustrated and described as a sequence of steps, it is contemplated that various embodiments of the process 700 may be performed in any order or combination and need not include all of the illustrated steps.

In one embodiment, in step 701, the query module 407 can receive a spatial query (e.g., "find me the surface footprint of my family road trip to Europe") indicating one or more of a requested conversation (e.g., "Let's check out an outdoor concert in Vienna Austria"), a requested surface footprint, or a requested conversation attribute. Such spatial query may be sent by any user of the system 100, such as users 103, the geographic database 115, the mapping platform 117, the service platform 123, the content providers 127, etc. By way of example, the requested conversation attribute includes one or more of a conversation participant (e.g., John's daughter) or a conversation time (e.g., John's family road trip in September 2019).

In one embodiment, in step 703, in response to the spatial query, the query module 407 can retrieve data associated with the one or more of the requested conversation, the requested surface footprint (e.g., the family trip surface footprint 621 in FIG. 6B), or the requested conversation attribute (e.g., "Let's check out an outdoor concert in Vienna Austria") from a map data layer. For instance, the map data layer can store conversation data that associates (1) one or more recorded conversations (e.g., conversations during John's family road trip to Europe), metadata associated with the one or more recorded conversations (e.g., location data, participants, topics, etc.), or a combination thereof to (2) one or more surface footprints representing one or more of a geographic area or a plurality of locations. Such map data layer can be stored locally in the UEs 107, in the geographic database 115, in the cloud, etc.

In one embodiment, in step 705, the output module 411 can provide the retrieved data as an output to users of the system 100 (e.g., to display devices and/or audio output devices (e.g. speakers) of UEs 107, to the geographic database 115, to the mapping platform 117, to the service platform 123, to the content providers 127, etc.).

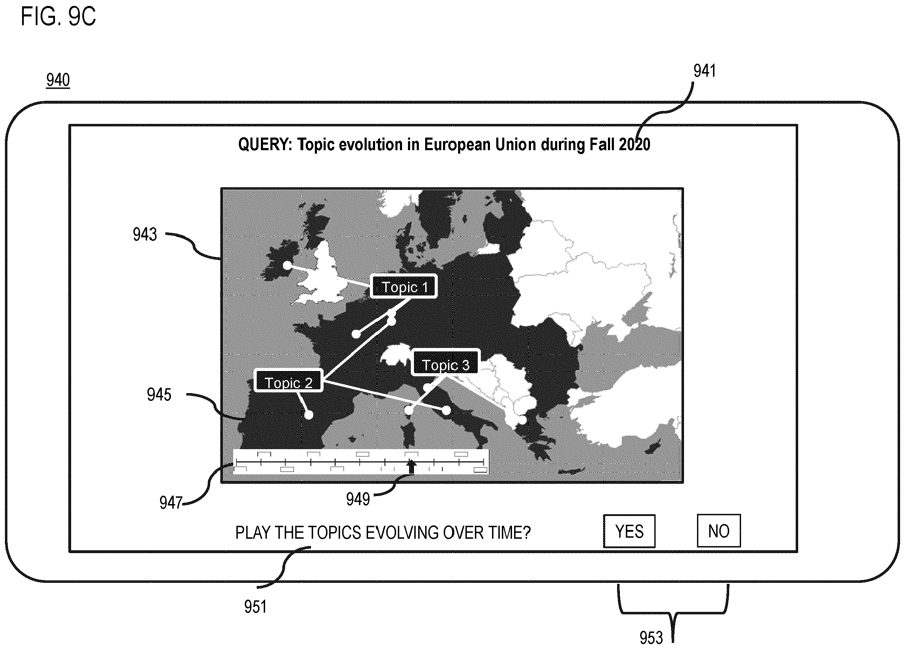

In one embodiment, the spatial query can further specify a surface footprint size (e.g., 15 km2 in FIG. 6A, 30000 km2 in FIG. 6B, the zoom level set via the slide bar 929 in FIG. 9B, etc.), and the retrieved data can further be based on the surface footprint size. In another embodiment, the spatial query can request a spatial evolution of topics over time. By way of example, FIG. 9C is diagram of an example user interface 940 for presenting a surface footprint of conversation and/or audio data, according to one or more example embodiments. The user interface 940 shows a query 941: "Topic evolution in European Union during Fall 2020," and a map 943 depicting a European Union conversation topic surface footprint 945, representative conversation topics (e.g., Topic 1, Topic 2, Topic 3), a timeline slide bar 947, and a time tap 949 on the slide bar 947. The European Union conversation topic surface footprint 945 is defined by boundaries of European Union in FIG. 9C. In this example, the system 100 can perform conversation statistical analysis to determine representative conversation topics trendy in the European Union during Fall 2020. The system 100 can then present the trendy topics. The user interface 940 also shows a prompt 951 of "Play the topics evolving over time" and two buttons 953 "Yes" and "No." The query 941 may be typed, finger-written, voice-commanded, etc. Instead of electing via the buttons 953, typing, etc., the user can voice-command to play the evolving topics.

In another embodiment, the spatial query can further specify one or more of a movement pattern or a mode of transport, and the retrieved data can further be based on the one or more of the movement pattern or the mode of transport.

In another embodiment, the conversation data is crowd-sourced from a plurality of recording devices capturing one or more conversations. By way of example, the conversations during John's family road trip to Europe can be captured by UEs 107 of John's family members, the smart speakers in their rental car and/or the in the hotels they stayed, etc. As another example, the conversations associated with FIG. 6C can be captured via UEs 107 and other devices (e.g., smart speakers, surveillance devices, etc.) of conversation participants in European Union for selected topics and locations semantic topics such as "Topic 1," "Topic 2," "Topic 3," etc., according to the privacy settings of the conversation participants. As mentioned, each conversation participant can set up the participant's own privacy settings to enable or restrict recording and/or output conversations per topic(s), per user or user group (e.g., family, friends, colleagues, etc.), per company (e.g., banks, e-commerce stores, etc.), per service platform (e.g., internet services, social network services, gaming services, etc.), per advertiser, etc.

In one embodiment, the privacy module 409 can control audio data recording and/or outputting based on privacy settings set by the system 100 and/or the user. For instance, the privacy module 409 can enable or disable an audio recording function of a device (e.g., UE 107) based on one or more of a device location (e.g., in a bedroom) or a conversation topic (e.g., national security topics). Each conversation participant can set up the participant's own privacy settings to enable or restrict recording and/or output conversations per topic(s), per user or user group (e.g., family, friends, colleagues, etc.), per company (e.g., banks, e-commerce stores, etc.), per service platform (e.g., internet services, social network services, gaming services, etc.), per advertiser, etc. By way of examples, a user can setup to record only conversations at certain locations and/or only tag certain conversations (e.g., work conversations and not personal content), review based on specific locations before releasing (e.g., on specific floors in an office building), etc.

In another embodiment, the audio data 111 can be reported anonymously to a cloud, then the system 100 can map-match the audio data like probe data, to analyze and report it without privacy issue. The anonymous audio data can be tagged with location data. By way of example, the system 10 can collect private conversations from different UEs 107, assign an anonymous ID number to each original vehicle/user ID number. This reassigned anonymous ID does not correspond to an individually identifiable account, yet can be tracked for audio data. Once the anonymous file is created, the original vehicle/user ID numbers can be discarded. Alternatively, the original vehicle/user ID numbers can be truncated to the fewer digits to remain anonymous. The system 100 then can map the audio data to digital map data of the geographic database 115, and provide the location-associated audio data as a layer over the digital map to the output module 411 as later explained with FIGs. 6C & 9B.

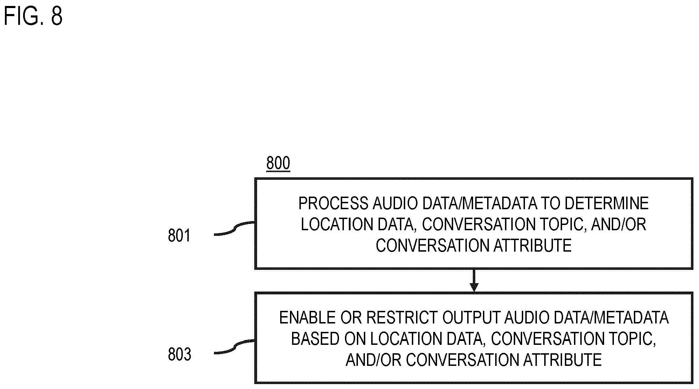

In another embodiment, the footprints or signatures can be generated into a map data layer (e.g., based on crowdsourced data from different people) and then used for navigation functions, such as routing, POI recommendations, etc. For example, the user can request "route me to areas or POIs where conversations about organic food occur more often than other places." This can also enhance social media functions. In yet another embodiment, the user can tag certain conversation topics and get notified when there is a hotspot. Similarly, for conversation topics that the user would like to avoid, the user can proactively avoid areas where such topics are often discussed based on the crowd sourced data as discussed in conjunction with FIG. 8.

FIG. 8 is a flowchart of a process 800 for enabling or restricting outputting audio data, according to one or more example embodiments. In various embodiments, the mapping platform 117 and/or any of the modules 401-411 may perform one or more portions of the process 800 and may be implemented in, for instance, a chip set including a processor and a memory as shown in FIG. 12. As such, the data mapping platform 117 and/or any of the modules 401-411 can provide means for accomplishing various parts of the process 800, as well as means for accomplishing embodiments of other processes described herein in conjunction with other components of the system 100. Although the process 800 is illustrated and described as a sequence of steps, it is contemplated that various embodiments of the process 800 may be performed in any order or combination and need not include all of the illustrated steps.

In one embodiment, in step 801, the data processing module 401 can process at least a portion of audio data (e.g., the audio data 111), metadata associated with the audio data (e.g., the metadata 113), or a combination thereof to determine one or more of location data (e.g., GPS coordinates, addresses, Wifi access points, etc.), a conversation topic, or a conversation attribute.

As mentioned, the audio data 111 can be conversation (e.g., talk, chat, discussion, speech, etc.) and/or audio sequences (e.g., a voice note, a voice message, an audio recording (e.g., concerts), an ambient sound recording, etc.) associated with one or more users of the UE 107.

As to the conversation topic, it can be any topic that can be semantically parsed from the recorded conversation(s) or audio data using natural language processing or any equivalent speech recognition systems. By way of example, people are discussing a new grocery store in downtown and the conversations are recorded and processed according to the embodiments described herein to relate the conversations and/or any of the topics in the conversations (e.g., no cash and no cashier) to a location or surface footprint, then the association of the conversations to the location/footprint can be used to support subsequent spatial queries about the conversations. Subsequently, users (e.g., conversation participants) can query the conversations based on the topic, the location, and any other metadata tags.

In one embodiment, in step 803, the privacy module 409 can enable or restrict a providing of the audio data, the metadata, or a combination thereof based on the one or more of the location data (e.g., in private home living rooms), the conversation topic (e.g., Topic A in FIG. 9B), or the conversation attribute (e.g., New York city and August 2020 in FIG. 9B) as an output for creating a map data layer.

In one embodiment, the map data layer can be generated by associating the audio data, the metadata, or a combination thereof with a surface footprint. For instance, the surface footprint (e.g., the New York City Topic A surface footprint 925 in FIG. 9B) represents a geographic area, a plurality of locations, or a combination thereof associated with the stored audio data (e.g., conversations regarding products/services associated with Topic A), the stored metadata, or a combination thereof.

In one embodiment, the enabling of the providing of the audio data, the metadata, or a combination is initiated based on determining that the location data indicates a non-privacy sensitive location. By way of example, (e.g., in stores providing products/services associated with Topic A based on privacy settings of conversation participants).

In another embodiment, the restricting of providing the audio data, the metadata, or a combination is based on determining that the location data indicates a privacy sensitive location (e.g., in private home living rooms based on privacy settings of conversation participants). In one embodiment, the geographic area and/or the plurality of locations include physical locations. In another embodiment, the geographic area and/or the plurality of locations include one or more virtual locations.

Although various embodiments are described with respect to conversations and/or audio data recorded in a physical world, it is contemplated that the approach described may be used within a virtual world. As virtual reality (VR) becomes more popular, conversations and audio data can be recorded in a virtual world and processed by the system 100 the same manners as they occur in a physical world. As such, users can query conversations and audio data recorded in a virtual world based on an associated location, such as a physical location simulated in the a virtual world, a virtual location existing in the virtual world, a physical or virtual location mentioned in the conversations and audio data, etc. A virtual location may have a link to the real world. For example, the system 100 can support virtual reality travel applications (that provide "realistic" virtual experiences) to assign user conversations to the locations presented via virtual reality, even when the conversations occur at a different real world location (e.g., home). A virtual location may have no link to the real world. For instance, users playing a virtual reality game (e.g., a Rome war game) can converse with each other and tag the conversation(s) with a virtual location in the game.

After the audio data, the metadata of the audio data, the location-associated audio data, the location-associated the metadata, the surface footprints, and/or the map layers are create, updated, and/or verified according to the embodiments described herein, they can be provided to the conversation participants 103, the audio data makers, and/or any other users based on relevant privacy settings. For example, the audio data, the metadata of the audio data, the location-associated audio data, the location-associated the metadata, the surface footprints, and/or the map layers can be provided back to the UEs 107, and/or other equivalent users as map data or as processed service information (e.g., provided by the services platform 123, the services 125, and/or the content providers 127). More specifically, the system 100 can provide the audio data, the metadata of the audio data, the location-associated audio data, the location-associated the metadata, the surface footprints, and/or the map layers to user via an alert of an conversation location tag. In response, the receiving users (e.g., UEs 107) can request to play the conversation.

In one embodiment, the system 100 can use one or more predictive algorithms (e.g., predictive machine learning models such as, but not limited to, a convolutional neural network) which uses conversation characteristics (e.g., detected from audio data 111) as input features to classify/cluster the conversations by category (e.g., topics, participant characteristics, POIs, mobility patterns, modes of transport, etc.), spatial signature, the background of the conversation, etc. The system 100 can then determine a surface footprint and/or a map data layer based on the category. By way of example, the conversations can be classified/clustered according to, but is not limited to, any of one or more of the following examples:
- Characteristics of conversation participants (e.g., ages, man/woman, child/adult/senior citizen, physical disability, etc.);
- Type of conversation topic (e.g., based on detected clothes, shoes, accessories, etc. worn by the identified pedestrian);
- Types of POIs, places, map features, etc. within a threshold proximity of conversation locations (e.g., based map data associated with the conversation locations);
- Types of modes of transport (e.g., cycles, carts, cars, buses, etc.) associated with conversations;
- Time information (e.g., timestamps, conversation time frames, work, school, event, etc. schedules, etc.).
- Contextual information such as but not limited to: weather information; activity information, etc. associated with conversations

Using one or more of the above factors (or other features detectable from the audio data, sensor data, etc.), the system 100 can identify conversation categories, background, participant numbers, participant identifications, etc., to support subsequent spatial queries about a particular conversation, a series of conversations, a category of conversations, etc.

In one embodiment, a trained machine learning model used in speech recognition can be trained to classify the audio data (including conversations and/or audio sequences), e.g., to identify background sound, tough tunes, different accents, etc. During training, a model training component feeds extracted audio features from the audio data 111 into a machine learning model (e.g., neural network) to compute a conversation category using an initial set of model parameters. The model training component then compares the conversation category to the training data. The model training component computes a loss function representing an accuracy of the conversation category for the initial set of model parameters. The model training component then incrementally adjusts the model parameters until the model minimizes the loss function (e.g., achieves a target identification accuracy). In other words, a "trained" machine learning model for determining conversation category and/or related characteristics is a machine learning model with parameters (e.g., coefficients, weights, etc.) adjusted to determine accurate conversation categories with respect to the training data.

It is noted that the features listed above are provided by way of illustration and not as limitations. It is contemplated that any features that are audio-identifiable and location-tagged may be applicable to the various embodiments described herein.

By determining the conversation category, the system 100 can also classify a corresponding geographic location, area, route, POI, map feature, etc. based on the conversation categories obtained from the audio data 111. In addition, the system 100 can determine background, the participant characteristic, the participant identities, etc. based on the conversation categories and/or features.

The above-discussed embodiments can support users to conveniently retrieve a location-associated conversation and/or audio sequence by leveraging the spatial information contained in that conversation and/or audio sequence and/or the metadata associated with it.

The above-discussed embodiments can compute a surface footprint and/or a map layer of given conversations, then present the surface footprint and/or map layer on a map for the users in response to spatial queries.

The above-discussed embodiments can find an audio recording based on a combined context of a location, conversation participant(s), etc. The location based can be a location of recording and/or a tagged location(s) mentioned in the recording for searching.

Returning to FIG. 1, in one embodiment, the mapping platform 117 of system 100 has access to the geographic database 115 for storing audio data 111 and/or the resulting surface footprints and map data layers generated based on the conversation categories detected in the audio data 111. In one embodiment, the mapping platform 117 also has connectivity to the geographic database 115 to provide location-based services based on the audio data 111 and/or surface footprints and map data layers. The mapping platform 117 can operate, for instance, in connection with UEs 107 and/or modes of transport (e.g., vehicles, planes, aerial drone vehicles, motorcycles, boats, bicycles, etc.) to provide conversation(s) as requested. The UE 107 may be a personal navigation device ("PND"), a cellular telephone, a mobile phone, a personal digital assistant ("PDA"), a watch, a camera, a computer, and/or any other device that supports location-based services, e.g., digital routing and map display. It is contemplated that a device employed by a conversation participants 103 may be interfaced with an on-board navigation system of a mode of transport (e.g., a vehicle) or wirelessly/physically connected to the vehicle to serve as the navigation system. Also, the UE 107 may be configured to access the communication network 121 by way of any known or still developing communication protocols to transmit and/or receive audio data 111, surface footprints, and/or map data layers.

Also, the UE 107 and/or mode of transport (e.g., a vehicle) may be configured with an application 109 for collecting audio data 111 and/or for interacting with one or more content providers 127, services 125 of the services platform 123, or a combination thereof. The application 109 may be any type of application that is executable on UE 107 and/or the mode of transport, such as mapping applications, location-based service applications, navigation applications, content provisioning services, camera/imaging applications, media player applications, social networking applications, calendar applications, and the like. In one embodiment, the application 109 may act as a client for the mapping platform 117 and perform one or more functions of the mapping platform 117 alone or in combination with the mapping platform 117. In yet another embodiment, the content providers 127, services 125, and/or services platform 123 receive the surface footprints and map data layers generated by the mapping platform 117 for executing its functions and/or services.

UE 107 and/or the mode of transport may be configured with various sensors (not shown for illustrative convenience) for acquiring and/or generating audio data 111 (e.g., street level imagery), probe or trajectory data associated with a vehicle, a driver, other vehicles, conditions regarding the driving environment or roadway, etc. For example, sensors may be used as GNSS/GPS receivers for interacting with one or more navigation satellites to determine and track the current speed, position and location of a vehicle travelling along a roadway. In addition, the sensors may gather other vehicle sensor data such as but not limited to tilt data (e.g., a degree of incline or decline of the vehicle during travel), motion data, light data, sound data, image data, weather data, temporal data and other data associated with the vehicle and/or UEs 107. Still further, the sensors may detect local or transient network and/or wireless signals, such as those transmitted by nearby devices during navigation of a vehicle along a roadway (Li-Fi, near field communication (NFC)) etc. This may include, for example, network routers configured within a premise (e.g., home or business), another UE 107 or vehicle or a communications-capable traffic system (e.g., traffic lights, traffic cameras, traffic signals, digital signage, etc.).

It is noted therefore that the above described data may be transmitted via communication network 121 as audio data 111, surface footprints, and/or map data layers, according to any known wireless communication protocols. For example, each UE 107, mobile application 109, user, and/or the vehicle may be assigned a unique probe identifier (probe ID) or pseudonym for use in reporting or transmitting data collected by the modes of transport and UEs 107. In one embodiment, each UE 107 and/or vehicle is configured to report probe data as probe points, which are individual data records collected at a point in time that records location data. Probes or probe points can be collected by the system 100 from the UEs 107, applications 115, and/or modes of transport (e.g., vehicles) in real-time, in batches, continuously, or at any other frequency requested by the system 100 over, for instance, the communication network 121 for processing by the mapping platform 117.

In one embodiment, the mapping platform 117 retrieves aggregated probe points gathered and/or generated by UE 107 resulting from the travel of UEs 107, and modes of transport on a road segment or other travel network (e.g., pedestrian paths, etc.). A probe database (not shown) can be used to store a plurality of probe points and/or trajectories (e.g., trajectory data) generated by different UEs 107, applications 115, modes of transport, etc. over a period of time. A time sequence of probe points specifies a trajectory—i.e., a path traversed by a UE 107, application 109, modes of transport, etc. over a period of time. In one embodiment, the trajectory data can be used for location alignment of the audio data 111 captured by the corresponding UE 107 and/or vehicle.

In one embodiment, the communication network 121 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (Wi-Fi), wireless LAN (WLAN), Bluetooth^{®}, Internet Protocol (IP) data casting, satellite, mobile ad-hoc network (MANET), and the like, or any combination thereof.

In one embodiment, the mapping platform 117 may be a platform with multiple interconnected components. The mapping platform 117 may include multiple servers, intelligent networking devices, computing devices, components, and corresponding software for minding pedestrian and/or vehicle specific probe data from mix-mode probe data. In addition, it is noted that the mapping platform 117 may be a separate entity of the system 100, a part of the one or more services 125 of the services platform 123, or included within the UE 107 (e.g., as part of the applications 115).

In one embodiment, the content providers 127 may provide content or data (e.g., probe data) to the components of the system 100. The content provided may be any type of content, such as audio data 111 and/or surface footprints and map data layers, location data, textual content, audio content, video content, image content, etc. In one embodiment, the content providers 127 may also store content associated with the modes of transport, the UE 107, the mapping platform 117, and/or the services 125. In another embodiment, the content providers 127 may manage access to a central repository of data, and offer a consistent, standard interface to data, such as a trajectories database, a repository of probe data, average travel times for one or more road links or travel routes (e.g., during free flow periods, day time periods, rush hour periods, nighttime periods, or a combination thereof), speed information for at least one vehicle, other traffic information, etc. Any known or still developing methods, techniques, or processes for retrieving and/or accessing trajectory or probe data from one or more sources may be employed by the mapping platform 117.

By way of example, the UE 107, application 109, modes of transport, and mapping platform 117 communicate with each other and other components of the system 100 using well known, new or still developing protocols. In this context, a protocol includes a set of rules defining how the network nodes within the communication network 121 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is the to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

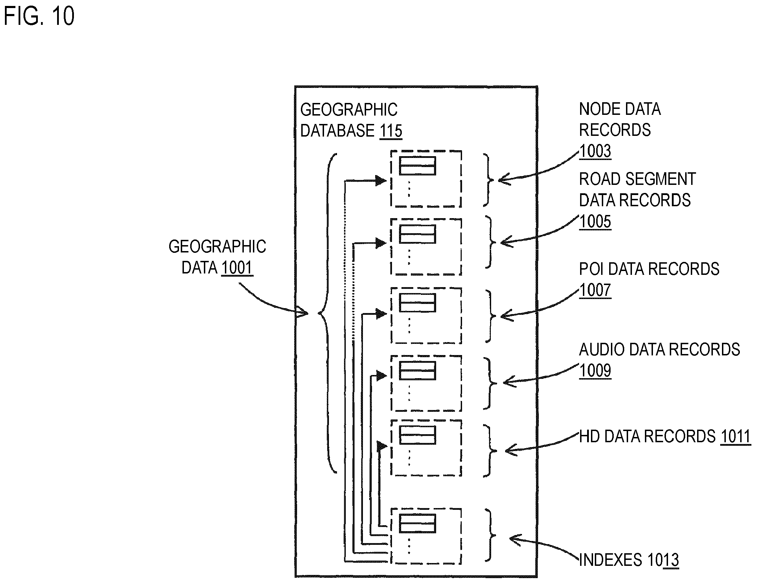

FIG. 10 is a diagram of a geographic database (such as the database 115), according to one embodiment. In one embodiment, the geographic database 115 includes geographic data 1001 used for (or configured to be compiled to be used for) mapping and/or navigation-related services, such as for video odometry based on the parametric representation of lanes include, e.g., encoding and/or decoding parametric representations into lane lines. In one embodiment, the geographic database 115 include high resolution or high definition (HD) mapping data that provide centimeter-level or better accuracy of map features. For example, the geographic database 115 can be based on Light Detection and Ranging (LiDAR) or equivalent technology to collect billions of 3D points and model road surfaces and other map features down to the number lanes and their widths. In one embodiment, the HD mapping data (e.g., HD data records 1011) capture and store details such as the slope and curvature of the road, lane markings, roadside objects such as signposts, including what the signage denotes. By way of example, the HD mapping data enable highly automated vehicles to precisely localize themselves on the road.

In one embodiment, geographic features (e.g., two-dimensional, or three-dimensional features) are represented using polygons (e.g., two-dimensional features) or polygon extrusions (e.g., three-dimensional features). For example, the edges of the polygons correspond to the boundaries or edges of the respective geographic feature. In the case of a building, a two-dimensional polygon can be used to represent a footprint of the building, and a three-dimensional polygon extrusion can be used to represent the three-dimensional surfaces of the building. It is contemplated that although various embodiments are discussed with respect to two-dimensional polygons, it is contemplated that the embodiments are also applicable to three-dimensional polygon extrusions. Accordingly, the terms polygons and polygon extrusions as used herein can be used interchangeably.

In one embodiment, the following terminology applies to the representation of geographic features in the geographic database 115.

"Node" - A point that terminates a link.

"Line segment" - A straight line connecting two points.

"Link" (or "edge") - A contiguous, non-branching string of one or more line segments terminating in a node at each end.

"Shape point" - A point along a link between two nodes (e.g., used to alter a shape of the link without defining new nodes).

"Oriented link" - A link that has a starting node (referred to as the "reference node") and an ending node (referred to as the "non reference node").

"Simple polygon" - An interior area of an outer boundary formed by a string of oriented links that begins and ends in one node. In one embodiment, a simple polygon does not cross itself.

"Polygon" - An area bounded by an outer boundary and none or at least one interior boundary (e.g., a hole or island). In one embodiment, a polygon is constructed from one outer simple polygon and none or at least one inner simple polygon. A polygon is simple if it just consists of one simple polygon, or complex if it has at least one inner simple polygon.

In one embodiment, the geographic database 115 follows certain conventions. For example, links do not cross themselves and do not cross each other except at a node. Also, there are no duplicated shape points, nodes, or links. Two links that connect each other have a common node. In the geographic database 115, overlapping geographic features are represented by overlapping polygons. When polygons overlap, the boundary of one polygon crosses the boundary of the other polygon. In the geographic database 115, the location at which the boundary of one polygon intersects they boundary of another polygon is represented by a node. In one embodiment, a node may be used to represent other locations along the boundary of a polygon than a location at which the boundary of the polygon intersects the boundary of another polygon. In one embodiment, a shape point is not used to represent a point at which the boundary of a polygon intersects the boundary of another polygon.

As shown, the geographic database 115 includes node data records 1003, road segment or link data records 1005, POI data records 1007, audio data records 1009, HD mapping data records 1011, and indexes 1013, for example. More, fewer, or different data records can be provided. In one embodiment, additional data records (not shown) can include cartographic ("carto") data records, routing data, and maneuver data. In one embodiment, the indexes 1013 may improve the speed of data retrieval operations in the geographic database 115. In one embodiment, the indexes 1013 may be used to quickly locate data without having to search every row in the geographic database 115 every time it is accessed. For example, in one embodiment, the indexes 1013 can be a spatial index of the polygon points associated with stored feature polygons.

In exemplary embodiments, the road segment data records 1005 are links or segments representing roads, streets, or paths, as can be used in the calculated route or recorded route information for determination of one or more personalized routes. The node data records 1003 are end points corresponding to the respective links or segments of the road segment data records 1005. The road link data records 1005 and the node data records 1003 represent a road network, such as used by vehicles, cars, and/or other entities. Alternatively, the geographic database 115 can contain path segment and node data records or other data that represent pedestrian paths or areas in addition to or instead of the vehicle road record data, for example.

The road/link segments and nodes can be associated with attributes, such as geographic coordinates, street names, address ranges, speed limits, turn restrictions at intersections, and other navigation related attributes, as well as POIs, such as homes, offices, gasoline stations, hotels, restaurants, museums, stadiums, offices, automobile dealerships, auto repair shops, buildings, stores, parks, etc. The geographic database 115 can include data about the POIs and their respective locations in the POI data records 1007. The geographic database 115 can also include data about places, such as cities, towns, or other communities, and other geographic features, such as bodies of water, mountain ranges, etc. Such place or feature data can be part of the POI data records 1007 or can be associated with POIs or POI data records 1007 (such as a data point used for displaying or representing a position of a city).

In one embodiment, the geographic database 115 can also include audio data records 1009 for storing the audio data, the metadata of the audio data, the location-associated audio data, the location-associated the metadata, the surface footprints, the map layers, training data, prediction models, annotated observations, computed featured distributions, sampling probabilities, and/or any other data generated or used by the system 100 according to the various embodiments described herein. By way of example, the audio data records 1009 can be associated with one or more of the node records 1003, road segment records 1005, and/or POI data records 1007 to support localization or visual odometry based on the features stored therein and the corresponding estimated quality of the features. In this way, the records 1009 can also be associated with or used to classify the characteristics or metadata of the corresponding records 1003, 1005, and/or 1007.

In one embodiment, as discussed above, the HD mapping data records 1011 model road surfaces and other map features to centimeter-level or better accuracy. The HD mapping data records 1011 also include lane models that provide the precise lane geometry with lane boundaries, as well as rich attributes of the lane models. These rich attributes include, but are not limited to, lane traversal information, lane types, lane marking types, lane level speed limit information, and/or the like. In one embodiment, the HD mapping data records 1011 are divided into spatial partitions of varying sizes to provide HD mapping data to vehicles and other end user devices with near real-time speed without overloading the available resources of the vehicles and/or devices (e.g., computational, memory, bandwidth, etc. resources).

In one embodiment, the HD mapping data records 1011 are created from high-resolution 3D mesh or point-cloud data generated, for instance, from LiDAR-equipped vehicles. The 3D mesh or point-cloud data are processed to create 3D representations of a street or geographic environment at centimeter-level accuracy for storage in the HD mapping data records 1011.

In one embodiment, the HD mapping data records 1011 also include real-time sensor data collected from probe vehicles in the field. The real-time sensor data, for instance, integrates real-time traffic information, weather, and road conditions (e.g., potholes, road friction, road wear, etc.) with highly detailed 3D representations of street and geographic features to provide precise real-time also at centimeter-level accuracy. Other sensor data can include vehicle telemetry or operational data such as windshield wiper activation state, braking state, steering angle, accelerator position, and/or the like.

In one embodiment, the geographic database 115 can be maintained by the content provider 127 in association with the services platform 123 (e.g., a map developer). The map developer can collect geographic data to generate and enhance the geographic database 115. There can be different ways used by the map developer to collect data. These ways can include obtaining data from other sources, such as municipalities or respective geographic authorities. In addition, the map developer can employ field personnel to travel by models of transport (e.g., vehicles) and/or user terminals 107 along roads throughout the geographic region to observe features and/or record information about them, for example. Also, remote sensing, such as aerial or satellite photography, can be used.

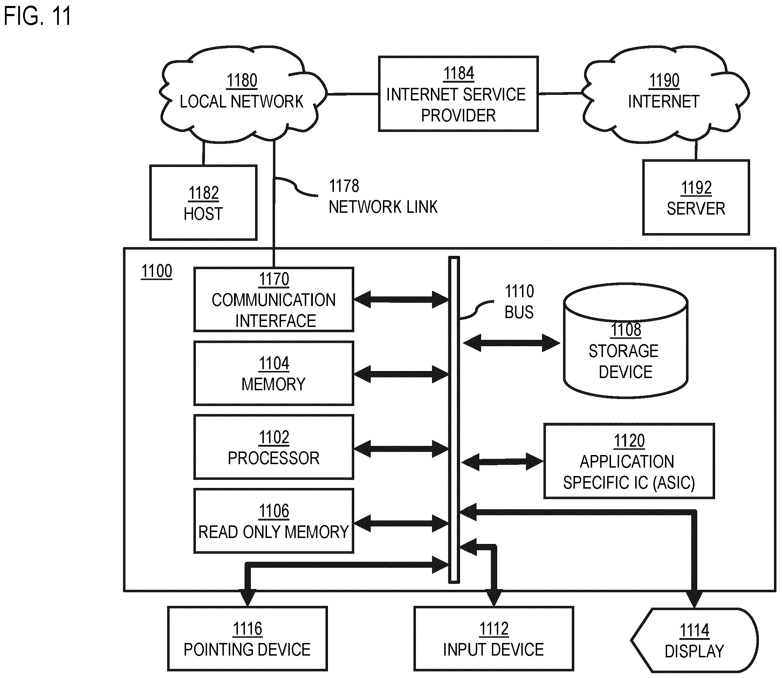

FIG. 11 illustrates a computer system 1100 upon which an embodiment of the invention may be implemented. Computer system 1100 is programmed (e.g., via computer program code or instructions) to associate conversation and/or audio data with locations as described herein and includes a communication mechanism such as a bus 1110 for passing information between other internal and external components of the computer system 1100. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 1110 includes one or more parallel conductors of information so that information is transferred quickly among devices coupled to the bus 1110. One or more processors 1102 for processing information are coupled with the bus 1110.

A processor 1102 performs a set of operations on information as specified by computer program code related to associating conversation and/or audio data with locations. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 1110 and placing information on the bus 1110. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 1102, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 1100 also includes a memory 1104 coupled to bus 1110. The memory 1104, such as a random access memory (RAM) or other dynamic storage device, stores information including processor instructions for associating conversation and/or audio data with locations. Dynamic memory allows information stored therein to be changed by the computer system 1100. RAM allows a unit of information stored at a location called a memory address to be stored and retrieved independently of information at neighboring addresses. The memory 1104 is also used by the processor 1102 to store temporary values during execution of processor instructions. The computer system 1100 also includes a read only memory (ROM) 1106 or other static storage device coupled to the bus 1110 for storing static information, including instructions, that is not changed by the computer system 1100. Some memory is composed of volatile storage that loses the information stored thereon when power is lost. Also coupled to bus 1110 is a non-volatile (persistent) storage device 1108, such as a magnetic disk, optical disk, or flash card, for storing information, including instructions, that persists even when the computer system 1100 is turned off or otherwise loses power.

Information, including instructions for associating conversation and/or audio data with locations, is provided to the bus 1110 for use by the processor from an external input device 1112, such as a keyboard containing alphanumeric keys operated by a human user, or a sensor. A sensor detects conditions in its vicinity and transforms those detections into physical expression compatible with the measurable phenomenon used to represent information in computer system 1100. Other external devices coupled to bus 1110, used primarily for interacting with humans, include a display device 1114, such as a cathode ray tube (CRT) or a liquid crystal display (LCD), or plasma screen or printer for presenting text or images, and a pointing device 1116, such as a mouse or a trackball or cursor direction keys, or motion sensor, for controlling a position of a small cursor image presented on the display 1114 and issuing commands associated with graphical elements presented on the display 1114. In some embodiments, for example, in embodiments in which the computer system 1100 performs all functions automatically without human input, one or more of external input device 1112, display device 1114 and pointing device 1116 is omitted.

In the illustrated embodiment, special purpose hardware, such as an application specific integrated circuit (ASIC) 1120, is coupled to bus 1110. The special purpose hardware is configured to perform operations not performed by processor 1102 quickly enough for special purposes. Examples of application specific ICs include graphics accelerator cards for generating images for display 1114, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 1100 also includes one or more instances of a communications interface 1170 coupled to bus 1110. Communication interface 1170 provides a one-way or two-way communication coupling to a variety of external devices that operate with their own processors, such as printers, scanners, and external disks. In general the coupling is with a network link 1178 that is connected to a local network 1180 to which a variety of external devices with their own processors are connected. For example, communication interface 1170 may be a parallel port or a serial port or a universal serial bus (USB) port on a personal computer. In some embodiments, communications interface 1170 is an integrated services digital network (ISDN) card or a digital subscriber line (DSL) card or a telephone modem that provides an information communication connection to a corresponding type of telephone line. In some embodiments, a communication interface 1170 is a cable modem that converts signals on bus 1110 into signals for a communication connection over a coaxial cable or into optical signals for a communication connection over a fiber optic cable. As another example, communications interface 1170 may be a local area network (LAN) card to provide a data communication connection to a compatible LAN, such as Ethernet. Wireless links may also be implemented. For wireless links, the communications interface 1170 sends or receives or both sends and receives electrical, acoustic, or electromagnetic signals, including infrared and optical signals, that carry information streams, such as digital data. For example, in wireless handheld devices, such as mobile telephones like cell phones, the communications interface 1170 includes a radio band electromagnetic transmitter and receiver called a radio transceiver. In certain embodiments, the communications interface 1170 enables connection via the communication network 121 to the UE 107 for providing conversation and/or audio data associated with locations.

The term computer-readable medium is used herein to refer to any medium that participates in providing information to processor 1102, including instructions for execution. Such a medium may take many forms, including, but not limited to, non-volatile media, volatile media, and transmission media. Non-volatile media include, for example, optical or magnetic disks, such as storage device 1108. Volatile media include, for example, dynamic memory 1104. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization, or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 1178 typically provides information communication using transmission media through one or more networks to other devices that use or process the information. For example, network link 1178 may provide a connection through local network 1180 to a host computer 1182 or to equipment 1184 operated by an Internet Service Provider (ISP). ISP equipment 1184 in turn provides data communication services through the public, world-wide packet-switching communication network of networks now commonly referred to as the Internet 1190.

A computer called a server host 1192 connected to the Internet hosts a process that provides a service in response to information received over the Internet. For example, server host 1192 hosts a process that provides information representing video data for presentation at display 1114. It is contemplated that the components of system can be deployed in various configurations within other computer systems, e.g., host 1182 and server 1192.

FIG. 12 illustrates a chip set 1200 upon which an embodiment of the invention may be implemented. Chip set 1200 is programmed to associate conversation and/or audio data with locations as described herein and includes, for instance, the processor and memory components described with respect to FIG. 11 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 1200 includes a communication mechanism such as a bus 1201 for passing information among the components of the chip set 1200. A processor 1203 has connectivity to the bus 1201 to execute instructions and process information stored in, for example, a memory 1205. The processor 1203 may include one or more processing cores with each core configured to perform independently. A multi-core processor enables multiprocessing within a single physical package. Examples of a multi-core processor include two, four, eight, or greater numbers of processing cores. Alternatively or in addition, the processor 1203 may include one or more microprocessors configured in tandem via the bus 1201 to enable independent execution of instructions, pipelining, and multithreading. The processor 1203 may also be accompanied with one or more specialized components to perform certain processing functions and tasks such as one or more digital signal processors (DSP) 1207, or one or more application-specific integrated circuits (ASIC) 1209. A DSP 1207 typically is configured to process real-world signals (e.g., sound) in real time independently of the processor 1203. Similarly, an ASIC 1209 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 1203 and accompanying components have connectivity to the memory 1205 via the bus 1201. The memory 1205 includes both dynamic memory (e.g., RAM, magnetic disk, writable optical disk, etc.) and static memory (e.g., ROM, CD-ROM, etc.) for storing executable instructions that when executed perform the inventive steps described herein to associate conversation and/or audio data with locations. The memory 1205 also stores the data associated with or generated by the execution of the inventive steps.

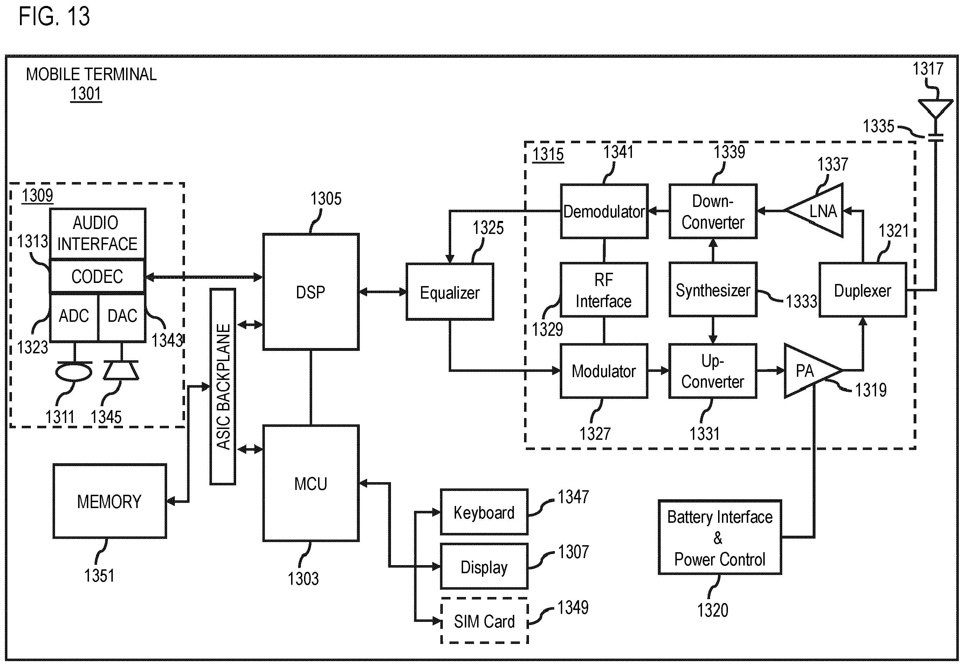

FIG. 13 is a diagram of exemplary components of a mobile terminal 1301 (e.g., handset, vehicle, or other mobile device or part thereof) capable of operating in the system of FIG. 1, according to one embodiment. Generally, a radio receiver is often defined in terms of front-end and back-end characteristics. The front-end of the receiver encompasses all of the Radio Frequency (RF) circuitry whereas the back-end encompasses all of the base-band processing circuitry. Pertinent internal components of the telephone include a Main Control Unit (MCU) 1303, a Digital Signal Processor (DSP) 1305, and a receiver/transmitter unit including a microphone gain control unit and a speaker gain control unit. A main display unit 1307 provides a display to the user in support of various applications and mobile station functions that offer automatic contact matching. An audio function circuitry 1309 includes a microphone 1311 and microphone amplifier that amplifies the speech signal output from the microphone 1311. The amplified speech signal output from the microphone 1311 is fed to a coder/decoder (CODEC) 1313.

A radio section 1315 amplifies power and converts frequency in order to communicate with a base station, which is included in a mobile communication system, via antenna 1317. The power amplifier (PA) 1319 and the transmitter/modulation circuitry are operationally responsive to the MCU 1303, with an output from the PA 1319 coupled to the duplexer 1321 or circulator or antenna switch, as known in the art. The PA 1319 also couples to a battery interface and power control unit 1320.

In use, a user of mobile station 1301 speaks into the microphone 1311 and his or her voice along with any detected background noise is converted into an analog voltage. The analog voltage is then converted into a digital signal through the Analog to Digital Converter (ADC) 1323. The control unit 1303 routes the digital signal into the DSP 1305 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wireless fidelity (WiFi), satellite, and the like.

The encoded signals are then routed to an equalizer 1325 for compensation of any frequency-dependent impairments that occur during transmission though the air such as phase and amplitude distortion. After equalizing the bit stream, the modulator 1327 combines the signal with a RF signal generated in the RF interface 1329. The modulator 1327 generates a sine wave by way of frequency or phase modulation. In order to prepare the signal for transmission, an up-converter 1331 combines the sine wave output from the modulator 1327 with another sine wave generated by a synthesizer 1333 to achieve the desired frequency of transmission. The signal is then sent through a PA 1319 to increase the signal to an appropriate power level. In practical systems, the PA 1319 acts as a variable gain amplifier whose gain is controlled by the DSP 1305 from information received from a network base station. The signal is then filtered within the duplexer 1321 and optionally sent to an antenna coupler 1335 to match impedances to provide maximum power transfer. Finally, the signal is transmitted via antenna 1317 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 1301 are received via antenna 1317 and immediately amplified by a low noise amplifier (LNA) 1337. A down-converter 1339 lowers the carrier frequency while the demodulator 1341 strips away the RF leaving only a digital bit stream. The signal then goes through the equalizer 1325 and is processed by the DSP 1305. A Digital to Analog Converter (DAC) 1343 converts the signal and the resulting output is transmitted to the user through the speaker 1345, all under control of a Main Control Unit (MCU) 1303-which can be implemented as a Central Processing Unit (CPU) (not shown).

The MCU 1303 receives various signals including input signals from the keyboard 1347. The keyboard 1347 and/or the MCU 1303 in combination with other user input components (e.g., the microphone 1311) comprise a user interface circuitry for managing user input. The MCU 1303 runs a user interface software to facilitate user control of at least some functions of the mobile station 1301 to associate conversation and/or audio data with locations. The MCU 1303 also delivers a display command and a switch command to the display 1307 and to the speech output switching controller, respectively. Further, the MCU 1303 exchanges information with the DSP 1305 and can access an optionally incorporated SIM card 1349 and a memory 1351. In addition, the MCU 1303 executes various control functions required of the station. The DSP 1305 may, depending upon the implementation, perform any of a variety of conventional digital processing functions on the voice signals. Additionally, DSP 1305 determines the background noise level of the local environment from the signals detected by microphone 1311 and sets the gain of microphone 1311 to a level selected to compensate for the natural tendency of the user of the mobile station 1301.

The CODEC 1313 includes the ADC 1323 and DAC 1343. The memory 1351 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 1351 may be, but not limited to, a single memory, CD, DVD, ROM, RAM, EEPROM, optical storage, or any other non-volatile or non-transitory storage medium capable of storing digital data.

An optionally incorporated SIM card 1349 carries, for instance, important information, such as the cellular phone number, the carrier supplying service, subscription details, and security information. The SIM card 1349 serves primarily to identify the mobile station 1301 on a radio network. The card 1349 also contains a memory for storing a personal telephone number registry, text messages, and user specific mobile station settings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. A method comprising:
processing audio data, metadata associated with the audio data, or a combination thereof to determine location data;
computing a surface footprint based on the location data, wherein the surface footprint indicates one or more of a geographic area or a plurality of locations associated with the audio data, the metadata, or a combination thereof; and
storing, in a geographic database, an association between the computed surface footprint and the audio data, the metadata, or a combination thereof.

2. The method of claim 1, wherein the processing of the audio data comprises performing speech recognition to determine the location data.

3. The method of claim 1, further comprising:
processing the audio data to determine one or more semantic topics represented in the audio data; and
mapping the one or more semantic topics based on the surface footprint.

4. The method of claim 3, wherein the surface footprint is used to provide a navigation function to favor or avoid said one or more of the geographic area or the plurality of locations associated with one or more semantic topics extracted from the audio data.

5. The method of claim 1, wherein the audio data includes one or more audio captures of one or more conversations, and wherein the metadata includes an identification of one or more conversations participants.

6. The method of claim 1, further comprising:
receiving a spatial query for a requested audio data, the spatial query indicating one or more locations;
in response to the spatial query, retrieving the associated audio data based on the surface footprint including the one or more indicated locations; and
providing the associated audio data that was retrieved as the requested audio data.

7. The method of claim 1, further comprising:
receiving a query for a requested surface footprint, the query specifying a topic, an attribute, or a combination thereof associated with the requested surface footprint;
in response to the query, retrieving the surface footprint with the associated audio data based on the topic, the attribute, or a combination thereof; and
providing the retrieved surface footprint as the requested surface footprint.

8. The method of claim 1, further comprising:
determining one or more of a mode of transport or a movement pattern associated with the audio data, the metadata, or a combination thereof; and
categorizing the surface footprint, the audio data, the metadata, or a combination thereof based on said one or more of the mode of transport or the movement pattern.

9. The method of claim 8, further comprising:
receiving a query for a requested surface footprint or a requested audio data, the query indicating one or more of a specified mode of transport or a specified movement pattern;
in response to the query, retrieving and providing the requested surface footprint or the requested audio data from the categorized surface footprint or the categorized audio data based on the topic, the attribute, or a combination thereof.

10. The method of claim 1, wherein the surface footprint is used to enable or disable an audio recording function of a device based on one or more of a device location or a conversation topic.

11. The method of claim 1, wherein the association between the audio data and the computed surface footprint is stored in a map layer of the geographic database.

12. The method of claim 1, further comprising:
providing data for presenting a user interface indicating a representation of one or more of the surface footprint, the audio data, or the metadata.

13. An apparatus comprising:
at least one processor; and
at least one memory including computer program code for one or more programs,
the at least one memory and the computer program code configured to, with the at least one processor, cause the apparatus to perform at least the following:
receive a spatial query indicating one or more of a requested conversation, a requested surface footprint, or a requested conversation attribute;
in response to the spatial query, retrieve data associated with the one or more of the requested conversation, the requested surface footprint, or the requested conversation attribute from a map data layer, the map data layer storing conversation data that associates (i) one or more recorded conversations, metadata associated with the one or more recorded conversations, or a combination thereof to (ii) one or more surface footprints representing one or more of a geographic area or a plurality of locations; and
provide the retrieved data as an output.

14. The apparatus of claim 13, wherein the spatial query further specifies one or more of:
a surface footprint size, and wherein the retrieved data is further based on the surface footprint size; and
one or more of a movement pattern or a mode of transport and wherein the retrieved data is further based on the one or more of the movement pattern or the mode of transport.

15. The apparatus of claim 13, wherein one or more of:
the requested conversation attribute includes one or more of a conversation participant or a conversation time; and
the conversation data is crowd-sourced from a plurality of recording devices capturing one or more conversations.

16. A non-transitory computer-readable storage medium carrying one or more sequences of one or more instructions which, when executed by one or more processors, cause an apparatus to at least perform the following steps:
processing at least a portion of audio data, metadata associated with the audio data, or a combination thereof to determine one or more of location data, a conversation topic, or a conversation attribute; and
enabling or restricting a providing of the audio data, the metadata, or a combination thereof based on the one or more of the location data, the conversation topic, or the conversation attribute as an output for creating a map data layer,
wherein the map data layer is generated by associating the audio data, the metadata, or a combination thereof with a surface footprint; and
wherein the surface footprint represents a geographic area, a plurality of locations, or a combination thereof associated with the stored audio data, the stored metadata, or a combination thereof.

17. The non-transitory computer-readable storage medium of claim 18, wherein the enabling of the providing of the audio data, the metadata, or a combination is initiated based on determining that the location data indicates a non-privacy sensitive location.

18. The non-transitory computer-readable storage medium of claim 18, wherein the restricting of providing the audio data, the metadata, or a combination is based on determining that the location data indicates a privacy sensitive location, wherein the geographic area, the plurality of locations, or a combination thereof include one or more virtual locations.
